# EUROPEAN PATENT SPECIFICATION

(11) **EP 4 123 541 B1**
(45) Date of publication and mention of the grant of the patent: **20.05.2026**
(21) Application number: 21902137.5
(22) Date of filing: 16.09.2021
(51) Int. Cl.: G06Q 20/34, G06Q 20/36, G06Q 20/32

(54) **CARD MANAGEMENT METHOD, USER TERMINAL, SERVER, CARD MANAGEMENT SYSTEM, AND STORAGE MEDIUM**
KARTENVERWALTUNGSVERFAHREN, BENUTZERENDGERÄT, SERVER, KARTENVERWALTUNGSSYSTEM UND SPEICHERMEDIUM
PROCÉDÉ DE GESTION DE CARTE, TERMINAL UTILISATEUR, SERVEUR, SYSTÈME DE GESTION DE CARTE ET SUPPORT DE STOCKAGE

(30) Priority: 08.12.2020 CN 202011422479
(43) Date of publication of application: 25.01.2023
(73) Proprietor: China Unionpay Co., Ltd., Shanghai 200135 (CN)
(72) Inventor: ZOU, Zhenzhong, Shanghai 200135 (CN); PENG, Cheng, Shanghai 200135 (CN); SUN, Quan, Shanghai 200135 (CN); LIU, Gang, Shanghai 200135 (CN); ZHAN, Chengchu, Shanghai 200135 (CN); CAI, Hua, Shanghai 200135 (CN)
(74) Representative: Grey, Ian Michael
(86) International application number: PCT/CN2021/118835
(87) International publication number: WO 2022/121429

(56) References cited:
- EP-A1- 3 564 886
- EP-A1- 3 693 911
- WO-A1-2013/155627
- WO-A1-2017/172430
- WO-A1-2019/210759
- WO-A1-2020/191456
- CN-A- 106 127 478
- CN-A- 107 403 312
- CN-A- 111 932 245
- CN-A- 112 581 123
- US-A1- 2010 138 518
- US-A1- 2013 152 185
- US-A1- 2014 018 048
- US-A1- 2015 206 136
- US-A1- 2015 235 491
- US-B1- 8 646 059
- EMVCO: "EMV Card Personalisation Specification", 1 July 2007 (2007-07-01), pages 1 - 104, XP093202189, Retrieved from the Internet <URL:https://www.emvco.com/specifications/?post_id=14976>
- EMVCO: "EMV Card Personalisation Specification", 1 August 2021 (2021-08-01), pages 1 - 114, XP093202171, Retrieved from the Internet <URL:https://www.emvco.com/specifications/?post_id=12467>

## Description

### TECHNICAL FIELD

The present application belongs to the field of data processing, and in particular relates to a card management method, a user terminal, a server, a card management system and a storage medium.

### BACKGROUND

With continuous development of information technologies, a user can implement a payment transaction through a user terminal installed with an application. Before the payment transaction, the user needs to bind a resource card, such as a bank card, for used in the payment transaction to the application, such that the resource card is available during the payment transaction through the application.

The user can manage resource cards as required, such as adding binding of a resource card to the application, or deleting a resource card that has been bound to the application. In order to facilitate management of the resource cards, program data packages and personalization data are set for each resource card and stored in the user terminal. In a case that the user desires to bind multiple cards, a large amount of personalization data are required to be stored in the user terminal, which increases occupation of storage resources of the user terminal.

EP 3 693 911 A1(HUAWEI TECH CO LTD [CN] 12 August 2020 (2020-08-12)) discloses a mobile phone storing a mobile wallet application whereby the mobile wallet application stores a plurality of card accounts which can be used for payment (both online and offline payment). A registration method is provided whereby the mobile wallet application displays two or more bank cards when the user is logged into the mobile wallet application, the two or more bank cards comprise card accounts which still need to be downloaded (downloading the respective card application and personalisation data) to the mobile wallet application whereby only one first card account (a to-be-verified bank card) is verified at the (first) card issuer (first bank) and all the other card accounts (related to other card issuers or other banks called to-be-bound cards) are automatically downloaded based on trust between the first bank and the other banks.

US 2015/206136 A1 ((MADDOCKS IAN DAVID ALAN [GB] ET AL) 23 July 2015 (2015-07-23) discloses a payment-enabled smartphone, wherein a shared cardholder verification method (CVM) applet serves a number of mobile payment "cardlets". The shared CVM applet validates CVM information input by a user of the smartphone and in response issues a CVM token. The CVM token is passed to a particular one of the mobile payment "cardlets" that is selected for a current transaction. The selected mobile payment "cardlet" submits the CVM token back to the shared CVM applet for verification. Upon verifying the CVM token, the shared CVM applet enables the selected mobile payment "cardlet" to perform the current transaction.

WO 2013/155627 A1 discloses systems and methods for facilitating contactless payment using cloud- based wallet containing payment credentials using a near field communication (NFC)-capable device and payment gateway servers. A user can use their existing payment card, herein referred to as a funding card, for contactless payments. A second payment card, herein referred to as a virtual card, is generated. The virtual card is associated with the funding card on a payment gateway server. The virtual card is used on a NFC-enabled mobile device. When a payment is initiated, the virtual card data is sent through the NFC system from a point of sale terminal. This information is sent to the payment gateway server, which retrieves the funding card to make the payment.

### SUMMARY

Embodiments of the present application provide a card management method, a user terminal, a server, a card management system, and a storage medium, which can reduce occupation of storage resources of the user terminal.

The scope of the invention is set out in the appended claims; all embodiments introduced in this description that do not fall under the scope of these claims are to be considered as unclaimed examples.

In a first aspect, an embodiment of the present application provides a card management method, applicable to a user terminal, the user terminal including a security element which stores first-type universal personalization data and second-type universal personalization data. The method includes: sending, to a server, a card binding message including card authentication information of a card to be bound such that the server determines a card type of the card to be bound and allocates dedicated card information for the card to be bound in a case of successful verification of the card to be bound, wherein the dedicated card information includes a card transaction identifier; receiving the card type of the card to be bound and the dedicated card information for the card to be bound sent by the server; and loading the dedicated card information for the card to be bound onto the security element, wherein the dedicated card information for the card to be bound together with matching universal personalization data are useable to perform transaction verification of the card to be bound, and the matching universal personalization data is the first-type universal personalization data or the second-type universal personalization data that matches the card type of the bound card. Further details of this first aspect are set out in claims 1-10.

In a second aspect, an embodiment (not claimed) of the present application provides a card management method, applicable to a server, the server storing first-type universal personalization data and second-type universal personalization data. The method includes: determining a card type of a card to be bound and verifying the card to be bound in response to a received card binding message sent by a user terminal, and allocating dedicated card information for the card to be bound in a case of successful verification, wherein the card binding message includes card authentication information of the card to be bound, the dedicated card information includes a card transaction identifier, the dedicated card information for the card to be bound together with matching universal personalization data are configured to perform transaction verification of the bound card, and the matching universal personalization data is the first-type universal personalization data or the second-type universal personalization data that matches the card type of the bound card; and sending a card binding response message to the server, the card binding response message including the card type of the card to be bound and the dedicated card information for the card to be bound.

In a third aspect, an embodiment of the present application provides a user terminal, wherein the user terminal includes a security element which stores first-type universal personalization data and second-type universal personalization data. The user terminal includes: a sending module configured to send, to a server, a card binding message including card authentication information of a card to be bound such that the server determines a card type of the card to be bound and allocates dedicated card information to the card to be bound in a case of successful verification of the card to be bound, wherein the dedicated card information includes a card transaction identifier; a receiving module configured to receive the card type of the card to be bound and the dedicated card information for the card to be bound sent by the server; and a processing module configured to load the dedicated card information for the card to be bound onto the security element, wherein the dedicated card information for the card to be bound together with matching universal personalization data are useable to perform transaction verification of the card to be bound, and the matching universal personalization data is the first-type universal personalization data or the second-type universal personalization data that matches the card type of the bound card. Further details of this third aspect are set out in claim 11.

In a fourth aspect, an embodiment (not claimed) of the present application provides a server, wherein the server stores first-type universal personalization data and second-type universal personalization data. The server includes: a receiving module configured to receive a card binding message sent by a user terminal, wherein the card binding message includes card authentication information of a card to be bound; a processing module configured to determine a card type of the card to be bound and verify the card to be bound in response to the card binding message, and allocate dedicated card information for the card to be bound in a case of successful verification, wherein the dedicated card information includes a card transaction identifier, the dedicated card information for the card to be bound together matching universal personalization data are useable to perform transaction verification of the card to be bound, and the matching universal personalization data is the first-type universal personalization data or the second-type universal personalization data that matches the card type of the card to be bound; and a sending module configured to send a card binding response message to the server, wherein the card binding response message includes the card type of the card to be bound and the dedicated card information for the card to be bound.

In a fifth aspect, an embodiment of the present application provides a user terminal, comprising a processor and a memory storing computer program instructions, wherein the processor executes the computer program instructions to implement the card management method according to the first aspect of the present application.

In a sixth aspect, an embodiment (not claimed) of the present application provides a server, comprising a processor and a memory storing computer program instructions, wherein the processor executes the computer program instructions to implement the card management method according to the second aspect of the present application.

In a seventh aspect, an embodiment (not claimed) of the present application provides a card management system, comprising the user terminal according to the fifth aspect of the present application and the server according to the sixth aspect of the present application.

In an eighth aspect, an embodiment of the present application provides a computer storage medium, storing computer program instructions, wherein the computer program instructions are executed by a processor to implement the card management method according to the first aspect of the present application or the second aspect (not claimed) of the present application.

Embodiments of the present application provide a card management method, a user terminal, a server, a card management system, and a storage medium. The security element of the user terminal stores first-type universal personalization data and second-type universal personalization data. In a process of binding a card, the user terminal interacts with the server through the card binding message to obtain the dedicated card information allocated to the card by the server. The obtained dedicated card information is loaded onto the security element. In the process of binding the card, there is no need to download all the personalization data for transaction verification of the card. When the card is used for a payment transaction, the user terminal and the server can use the matching universal personalization data and the dedicated card information for the card for transaction verification. The user terminal does not need to repeatedly store the universal personalization data required for transaction verification for each card, thereby reducing occupation of storage resources of the user terminal.

### BRIEF DESCRIPTION OF THE DRAWINGS

In order to illustrate technical solutions of embodiments of the present application more clearly, the drawings required for the embodiments of the present application will be briefly described. For a person skilled in the art, other drawings can also be obtained from these drawings without any inventive effort.
Fig. 1 is a schematic diagram of an example of an application scenario of a card management method according to an embodiment of the present application;
Fig. 2 is a schematic diagram of an example of contents stored in a security element of a user terminal according to an embodiment of the present application;
Fig. 3 is a flowchart of an embodiment of a card management method according to a first aspect of the present application;
Fig. 4 is a flowchart of another embodiment of a card management method according to the first aspect of the present application;
Fig. 5 is a flowchart of another embodiment of a card management method according to the first aspect of the present application;
Fig. 6 is a flowchart of another embodiment of a card management method according to the first aspect of the present application;
Fig. 7 is a flowchart of another embodiment of a card management method according to the first aspect of the present application;
Fig. 8 is a flowchart of an embodiment of a card management method according to a second aspect of the present application;
Fig. 9 is a flowchart of another embodiment of a card management method according to the second aspect of the present application;
Fig. 10 is a flowchart of another embodiment of a card management method according to the second aspect of the present application;
Fig. 11 is a flowchart of another embodiment of a card management method according to the second aspect of the present application;
Fig. 12 is a flowchart of another embodiment of a card management method according to the second aspect of the present application;
Fig. 13 is a flowchart of an example of a card binding process according to an embodiment of the present application;
Fig. 14 is a flowchart of an example of a card deleting process according to an embodiment of the present application;
Fig. 15 is a flowchart of another example of a card binding process according to an embodiment of the present application;
Fig. 16 is a schematic structural diagram of an embodiment of a user terminal according to a third aspect of the present application;
Fig. 17 is a schematic structural diagram of another embodiment of a user terminal according to the third aspect of the present application;
Fig. 18 is a schematic structural diagram of an embodiment of a server according to a fourth aspect of the present application;
Fig. 19 is a schematic structural diagram of another embodiment of a server according to the fourth aspect of the present application;
Fig. 20 is a schematic structural diagram of an embodiment of a user terminal according to a fifth aspect of the present application; and
Fig. 21 is a schematic structural diagram of an embodiment of a server according to a sixth aspect of the present application.

### DETAILED DESCRIPTION

Features and exemplary embodiments of various aspects of the present application will be described in detail below. In order to make the objects, technical solutions and advantages of the present application clearer, the present application is further described in detail below with reference to the drawings and specific embodiments. It should be understood that, specific embodiments described herein are merely for the illustration of the present application, not for limiting the present application. It will be apparent to a person skilled in the art that the present application can be practiced without some of these specific details. The following description of the embodiments is merely to provide a better understanding of the present application by illustrating examples of the present application.

With continuous development of information technologies, a user can implement a payment transaction through an application installed in a user terminal. The application may be bound with cards, such as bank cards, of the use. During a payment transaction, resources for the payment transaction are transferred out from one of the cards bound to the application. Transaction verification is required for payment transactions with the respective cards. In order to realize the transaction verification, each of the cards is allocated with a corresponding program data package and personalization data, which are stored in the user terminal. Each of the cards has a dedicated program data package and personalization data. For example, the application of the user terminal is bound with cards C1, C2 and C3. Correspondingly, the user terminal stores a program data package Cap 1 and personalization data Data C1 corresponding to the card C1, a program data package Cap 2 and personalization data Data C2 corresponding to the card C2, and a program data package Cap 3 and personalization data Data C3 corresponding to the card C3. When multiple cards are bound to the application, it is necessary to store personalization data corresponding to every one of the multiple cards in the user terminal, which occupies more storage resources of the user terminal.

The embodiments of the present application provide a card management method, a user terminal, a server, a card management system and a storage medium, which can reduce occupation of storage resources of the user terminal for card management.

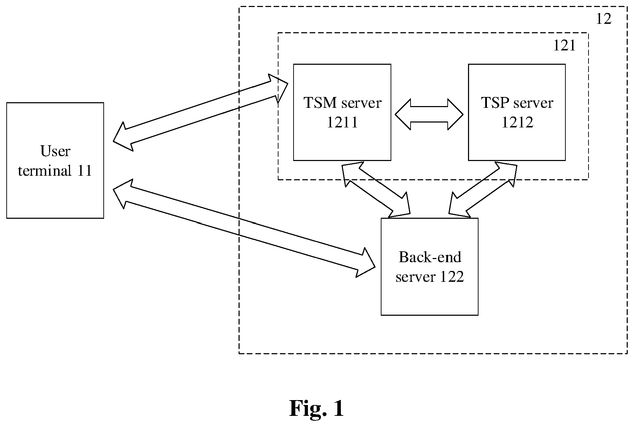

Fig. 1 is a schematic diagram of an example of an application scenario of a card management method according to an embodiment of the present application. As shown in Fig. 1, the card management method according to the embodiment of the present application may involve a user terminal 11 and a server 12, which are not limited herein.

The user terminal 11 may include a terminal devices with a payment transaction function such as a mobile phone, a tablet computer, a wearable device, various types of special-shaped cards and the like, which are not limited herein. The user terminal 11 may be installed with an application for implementing a payment transaction, and the payment transaction can be realized through the application. Correspondingly, the application of the user terminal 11 may include a Software Development Kit (SDK) for a wearable terminal device, a Software Development Kit for any other type of terminal device, and a Software Development Kit for a payment application, which are not limited herein.

In some examples, the user terminal may include a payment terminal and an auxiliary terminal. The auxiliary terminal can be used as an interaction relay device between the payment terminal and the server, that is, the payment terminal can interact with the server through the auxiliary terminal. For example, the payment terminal may include a wearable device, such as a smart watch, smart glasses or the like, and the auxiliary terminal may include a device such as a mobile phone, which are not limited herein.

The user terminal 11 may include a security element. The security element is a security protection element set in the user terminal 11, which may include a specific hardware circuit and/or a built security environment, which is not limited herein. For example, the security element may include a Secure Element (SE), a Trusted Execution Environment (TEE), SE+TEE, Host-based Card Emulation (HCE), and the like. In an embodiment of the present application, the security element stores first-type universal personalization data and second-type universal personalization data. Specifically, the first-type universal personalization data and the second-type universal personalization data may be downloaded to the security element during an initial card binding process, or the first-type universal personalization data and the second-type universal personalization data may be stored in the security element before the user terminal 11 leaves the factory, which is not limited herein.

The first-type universal personalization data and the second-type universal personalization data can work together with dedicated card information for respective cards to realize transaction verification of the respective cards in respective payment transaction processes. Specifically, the first-type universal personalization data can be used for transaction verification of a card with a card type being a first-type. For a card with a card type being the first-type, the first-type universal personalization data together with the dedicated card information for the card are used to perform transaction verification of the card. The second-type universal personalization data can be used for transaction verification of a card with a card type being a second-type. For a card with a card type being the second-type, the second-type universal personalization data and the dedicated card information for the card are used to perform transaction verification of the card.

For example, in a case that the card is a bank card, a card of the first-type may be a debit card, and a card of the second-type may be a credit card, which is not limited herein.

Different cards have different dedicated card information. In some examples, the dedicated card information may include a card transaction identifier of the card, i.e., Token. Different cards have different card transaction identifiers. The formats of card transaction identifiers may also be different for different types of cards. For example, a card of the first-type may be a debit card, and the card transaction identifier of the debit card may be a 19-digit identifier; and the second-type card may be a credit card, and the card transaction identifier of the credit card may be a 16-digit identifier.

A mapping relationship among the dedicated card information for the card, the card type of the card, and a life state of the card may be stored in the security element, or may be stored in another device in the user terminal, which is not limited herein. The mapping relationship may be stored and managed in a form of a table, which is not limited here. The life state of the card represents a use state of the card. In some examples, the use state of the card may include a valid state, an invalid state, and a default use state. If the use state of the card is the valid state, it means that the card has been bound and is available. If the use state of the card is the invalid state, it means that the card has been deleted and is unavailable. If the use state of the card is the default use state, it means that the card has been bound and will be used for implementing a payment transaction.

In some examples, the security element in the user terminal may store a universal program data package. The universal program data package includes programs required for operation of the security element, which is not limited here. The universal program data package may specifically be in a form of a Cap package. operations on card related information, the dedicated card information, the first-type universal personalization data, the second-type universal personalization data and the like that are performed internally in the security element can share this program data package, and the universal program data package will not be deleted upon being stored in the security element, so as to avoid frequent downloading and deleting of the program data package during card binding processes and card deleting processes. Specifically, the universal program data package may be downloaded to the security element in an initial card binding process, or the universal program data package may be stored in the security element before the user terminal leaves the factory, which is not limited herein.

In some examples, the dedicated card information may further include dedicated personalization data. Different cards have different dedicated personalization data. For a card with a card type being the first-type, transaction verification calculation of the card can be realized by using a card transaction identifier of the card, dedicated personalization data of the card and the first-type universal personalization data. For a card with a card type being the second-type, transaction verification calculation of the card can be realized by using a card transaction identifier of the card, dedicated personalization data of the card and the second-type universal personalization data. The first-type universal personalization data is personalization data required for transaction verification which is the same for various cards of the first-type. The second-type universal personalization data is personalization data required for transaction verification which is the same for various cards of the second-type. The dedicated personalization data is personalization data required for transaction verification which varies for different cards.

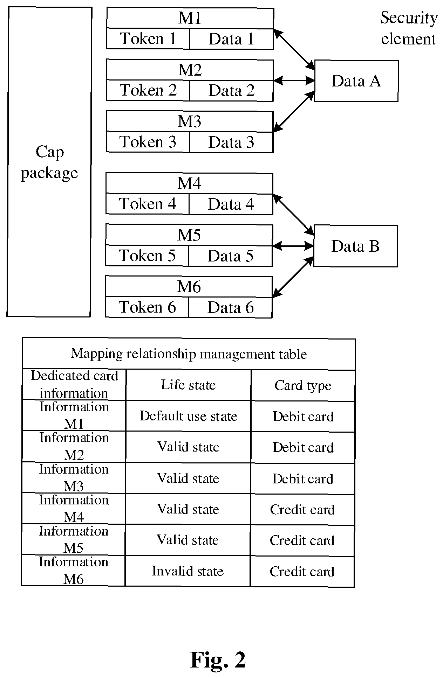

For example, Fig. 2 is a schematic diagram of an example of contents stored in a security element of a user terminal according to an embodiment of the present application. As shown in Fig. 2, the security element stores a universal program data package, i.e., a Cap package, the first-type universal personalization data, the second-type universal personalization data, the dedicated card information for each bank card which has been bound, and a mapping relationship management table. The card with the first-type is a debit bank card, and the first-type universal personalization data is shown as Data A. The card with the second-type is a credit bank card, and the second-type universal personalization data is shown as Data B. It is assumed that the application is bound with bank cards C1, C2, C3, C4, C5 and C6. The dedicated card information may include card transaction identifier and dedicated personalization data. Among them, the bank cards C1, C2 and C3 are debit cards, and the corresponding dedicated card information for the bank cards C1, C2 and C3 are information M1, information M2 and information M3 respectively. The information M1 includes a card transaction identifier Token 1 and dedicated personalization data Data 1; the information M2 includes a card transaction identifier Token 2 and dedicated personalization data Data 2; and the information M3 includes a card transaction identifier Token 3 and dedicated personalization data Data 3. The dedicated card information for the bank cards C1, C2 and C3 all correspond to the first-type universal personalization data (the corresponding relationship is indicated by arrows in Fig. 2). The bank cards C4, C5 and C6 are credit cards, and the corresponding dedicated card information for the bank cards C4, C5 and C6 are information M4, information M5 and information M6 respectively. The information M4 includes a card transaction identifier Token 4 and dedicated personalization data Data 4; the information M5 includes a card transaction identifier Token 5 and dedicated personalization data Data 5; and the information M6 includes a card transaction identifier Token 6 and dedicated personalization data Data 6. The dedicated card information for the bank cards C4, C5 and C6 all correspond to the second-type universal personalization data (the corresponding relationship is indicated by arrows in Fig. 2). The mapping relationship management table includes the respective dedicated card information, card type and life state of each bank card C1, C2, C3, C4, C5 and C6. As shown in Fig. 2, the life states of the bank cards C1, C2, C3, C4, C5 and C6 correspond to a default use state, a valid state, a valid state, a valid state, a valid state and an invalid state, respectively.

It should be noted that, the number of card types is not limited here. For example, in a case that there are a card of a third-type, a card of a fourth-type card and the like, the security element may further store third-type universal personalization data and fourth-type universal personalization data, and the like. The third-type universal personalization data and the fourth-type universal personalization data are similar to the first-type universal personalization data and the second-type universal personalization data, and their function and usage during a card management process are the same as those of the first-type universal personalization data and the second-type universal personalization data, which will not be repeated here.

The server 12 may include a management server 121 and a back-end server 122 for an application, which is not limited herein. In some examples, the management server 121 may include a Trusted Service Manager (TSM) server 1211 and a Telematics Service Provider (TSP) server 1212. The management server 121 and the back-end server 122 may interact with each other. The TSM server 1211 and the TSP server 1212 may interact with each other.

The server 12 may store the first-type universal personalization data and the second-type universal personalization data corresponding to each user terminal interacting with the server 12. The first-type universal personalization data and the second-type universal personalization data stored in the security element of the user terminal are the same as the first-type universal personalization data and the second-type universal personalization data stored in the server. It should be noted that, the first-type universal personalization data and the second-type universal personalization data corresponding to different user terminals are different, and they can be allocated centrally by the server.

The server 12 can synchronize a mapping relationship among the dedicated card information, the card type, and the life state of the card with the user terminal 11, so that the information in the user terminal 11 and the information in the server 12 can be synchronized with each other, to avoid an error in a payment transaction caused by unsynchronized information.

The card management method, user terminal, server, card management system and storage medium according to the present application will be specifically described below.

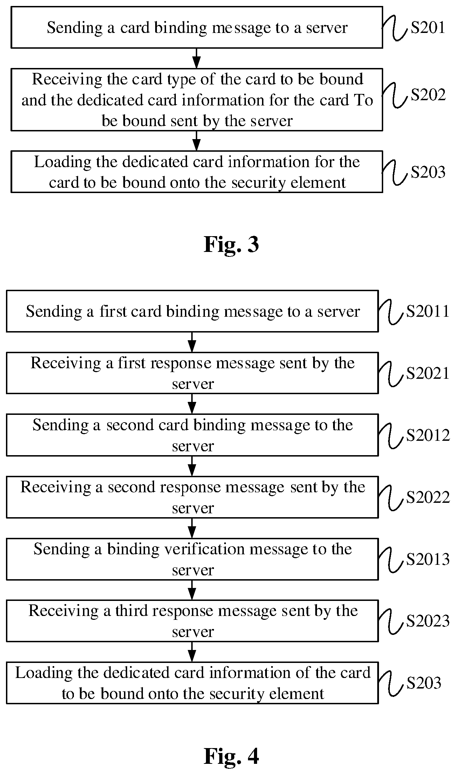

A first aspect of the present application provides a card management method, which is applicable to a user terminal. Fig. 3 is a flowchart of an embodiment of a card management method according to a first aspect of the present application. As shown in Fig. 3, the card management method may include steps S201 to S203.

In step S201, a card binding message is sent to the server such that the server determines a card type of a card to be bound and in a case of successful verification of the card to be bound, allocates dedicated card information for the card to be bound.

The card binding message includes card authentication information of the card to be bound. The card authentication information is used in authentication of the card. In some examples, the card authentication information may include, but is not limited to, a card identifier, card type verification information, and an input verification code. The card identifier identifies the card. For example, the card identifier may be a card number. The card type verification information is useable to verify a certain type of cards. The card type verification information may be different for different card types. For example, a card of a first-type is a debit card, and the card type verification information corresponding to the card of the first-type may include a withdrawal password. A card of a second-type is a credit card, and the card type verification information corresponding to the card of the second-type may include a credit card security code (i.e., CVN2 code) and a credit card validity period. The input verification code may be a verification code received by the user terminal, and may specifically be a verification code inputted by the user, or a verification code that is identified and inputted from a short message including a dynamic verification code under authorization of the user terminal, which is not limited herein.

The card binding message may include multiple messages, and the multiple messages may be sent via multiple processes according to verification requirements. The card authentication information included in each of the multiple messages may be different, which will be described in detail later.

After receiving the card binding message, the server can verify the card according to the card authentication information in the card binding message. In a case of successful verification, the server allocates dedicated card information to the card indicated by the card binding message, i.e., the card to be bound. The dedicated card information includes a card transaction identifier. In a case of using the card for a payment transaction, the user terminal sends to the card transaction identifier to another device, such that the another device determines an account for the payment transaction according to the card transaction identifier. The card transaction identifier is allocated by the server, and may vary for a different card. In some examples, the dedicated card information may also include dedicated personalization data as discussed in the descriptions hereinabove, which will not be repeated here.

In step S202, the card type of the card to be bound and the dedicated card information for the card to be bound sent by the server are received.

The user terminal may receive the card type of the card and the dedicated card information for the card through multiple processes. When the card binding message includes multiple messages, the server may send the card type of the card to be bound and the dedicated card information for the card to be bound through multiple processes in response to each message in the card binding message. Specifically, the server may send the card type of the card to be bound and the dedicated card information for the card to be bound through respective card binding response messages.

The sequential order of the step S201 and step S202 may be determined according to a relationship between requests and responses for the card binding message, the card type, and the dedicated card information, which is not limited here.

In step S203, the dedicated card information for the card to be bound is loaded onto the security element.

The dedicated card information for the card to be bound together with matching universal personalization data are useable to perform transaction verification of the card to be bound. The matching universal personalization data is the first-type universal personalization data or the second-type universal personalization data that matches the card type of the card to be bound. That is, if the card type of the card to be bound is the first-type, the matching universal personalization data is the first-type universal personalization data. If the card type of the card to be bound is the second-type, the matching universal personalization data is the second-type universal personalization data.

Different cards of the same card type have different dedicated card information, but different cards of the same card type have the same matching universal personalization data. That is, different cards of the same card type share the same matching universal personalization data.

In some examples, in a case that the card to be bound includes a first card and a second card with a same card type, the dedicated card information for the first card together with target matching universal personalization data are useable to perform transaction verification of the first card, and the dedicated card information for the second card together with the target matching universal personalization data are useable to perform transaction verification of the second card. The target matching universal personalization data is the first-type universal personalization data or the second-type universal personalization data that matches the card type of the first card. In a case that there are more cards of the same card type, the more cards share the same target matching universal personalization data.

For example, as shown in Fig. 2, the dedicated card information M1 of the bank card C1 together with the first-type universal personalization data Data A are useable to perform transaction verification of the bank card C1. The dedicated card information M2 of the bank card C2 together with the first-type universal personalization data Data A are useable to perform transaction verification of the bank card C2. The dedicated card information M3 of the bank card C3 together with the first-type universal personalization data Data A are useable to perform transaction verification of the bank card C3. The bank cards C1, C2 and C3 have different dedicated card information, but share the same first-type universal personalization data.

Moreover, the first-type universal personalization data and the second-type universal personalization data are universal, and can be used in different user terminals and different applications, so better compatibility can be obtained.

Specifically, the user terminal may load the dedicated card information for the card to be bound to the security element through a control instruction. The control instruction may be sent by the server to the user terminal first, and then sent by the user terminal to the security element, so as to control the security element. In some examples, the control instruction may include an Application Protocol Data Unit (APDU) instruction, which is not limited in its contents.

In some examples, in a case that the application in the user terminal performs card binding for the first time, the server may further send a universal program data package to the user terminal. The user terminal receives the universal program data package, and loads the universal program data package onto the security element. Specifically, the user terminal may load the universal program data package onto the security element through the APDU instruction. The universal program data package may be divided into multiple parts for loading by the APDU instruction, which is not limited herein in its contents.

In a case that the application in the user terminal has been bound with a card, the universal program data package will not be deleted from the user terminal.

In some examples, in a case that the application in the user terminal performs card binding for the first time, the user terminal may further trigger installation of a card organization program. Specifically, the user terminal may install the card organization program to the security element through the APDU instruction, which is not limited here in its contents.

In the embodiment of the present application, the security element in the user terminal stores the first-type universal personalization data and the second-type universal personalization data. In a process of binding a card, the user terminal interacts with the server through the card binding message to obtain the dedicated card information allocated by the server for the card. The obtained dedicated card information is loaded onto the security element. In the process of binding the card, there is no need to download all the personalization data required for transaction verification of the card. When the card is used for a payment transaction, the user terminal and the server can use the matching universal personalization data and the dedicated card information for the card for transaction verification. The user terminal does not need to repeatedly store the universal personalization data required for transaction verification for each card, thereby reducing occupation of storage resources of the user terminal.

Moreover, except for the case that the application in the user terminal binds a card for the first time, contents needed to be downloaded by the user terminal in the process of binding the card does not include universal personalization data, which reduces time spent by the user terminal for downloading data. Therefore, binding of the card can be accelerated, and becomes faster and simpler.

In some other embodiments, the card binding message may include a first card binding message, a second card binding message and a binding verification message. The card authentication information includes a card identifier, card type verification information and an input verification code. Fig. 4 is a flowchart of another embodiment of a card management method according to the first aspect of the present application. Fig. 4 differs from Fig. 3 in that, step S201 in Fig. 3 can be divided into steps S2011 to S2013 in Fig. 4, and step S202 in Fig. 3 can be divided into steps S2021 to S2023 in Fig. 4.

In step S2011, a first card binding message is sent to the server.

The first card binding message includes the card identifier of the card to be bound. The user terminal sends the first card binding message to the server, such that the server identifies the card type of the card according to the card identifier of the card to be bound, and feeds back the card type of the card to the user terminal through a response message. For different types of cards, their card identifiers have different formats. The server can identify the card type of the card to be bound based on a format of the card identifier of the card to be bound.

In step S2021, a first response message sent by the server is received.

The first response message includes the card type of the card. The server may feedback the card type of the card to the user terminal through the first response message.

In step S2012, a second card binding message is sent to the server.

The second card binding message includes card type verification information of the card to be bound. For different types of cards different card type verification information are provided. Specifically, in a case that the card type of the card to be bound is a first-type, the card type verification information includes first-type verification information; and in a case that the card type of the card to be bound is a second-type, the card type verification information includes second-type verification information. The first-type verification information is different from the second-type verification information. For example, in a case that a card of the first-type is a debit card, the first-type verification information may include a withdrawal password; and in a case that a card of the second-type is a credit card, the second-type verification information may include a credit card security code and a credit card validity period.

Upon reception of the first response message sent by the server, the user terminal sends a second card binding message to the server, such that the server performs card type verification according to the card type verification information in the second card binding message. The card type verification is a verification for that type of cards. For example, in a case that a card of the first-type is a debit card, the verification is performed with respect to a type of debit card; and in a case that a card of the second-type is a credit card, the verification is performed with respect to a type of credit card.

In step S2022, a second response message sent by the server is received.

The second response message includes a dynamic verification code. In a case of successful verification of the card type, the server may feedback the dynamic verification code to the user terminal through the second response message.

In step S2013, a binding verification message is sent to the server.

The binding verification message includes an input verification code. The input verification code may be a verification code received by the user terminal, and may specifically be a verification code inputted by the user, or a verification code that is identified and inputted from a short message including a dynamic verification code under authorization of the user terminal, which is not limited herein.

Upon reception of the second response message sent by the server, a binding verification message is sent to the server, such that the server performs, according to the input verification code and the dynamic verification code, verification of the verification code. Upon successful verification of the card type and successful verification of the verification code, the server determines that verification of the card to be bound is successful.

In step S2023, a third response message sent by the server is received.

The third response message includes dedicated card information for the card to be bound. Upon successful verification of the card, the server allocates the dedicated card information for the card to be bound to the user terminal, and may send it to the user terminal through the third response message.

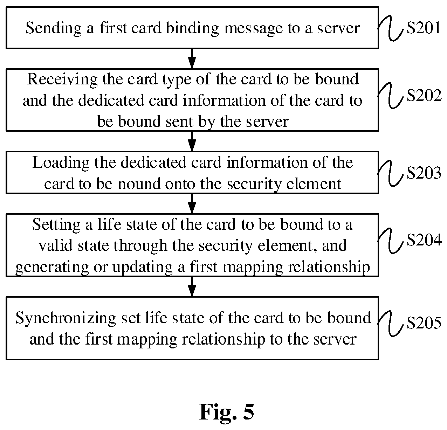

In order to facilitate management of information of the card, a life state may be set for the card, and data synchronization between the user terminal and the server may be performed to ensure data consistency between the user terminal and the server. Fig. 5 is a flowchart of another embodiment of a card management method according to the first aspect of the present application. Fig. 5 differs from Fig. 3 in that, the card management method shown in Fig. 5 may further include steps S204 and S205.

In step S204, a life state of the card to be bound is set to a valid state through the security element, and a first mapping relationship is generated or updated.

The first mapping relationship includes a mapping relationship among the dedicated card information or the card to be bound, the card type of the card to be bound, and the life state of the card to be bound.

In some embodiments, the card has never been bound with the application in the user terminal before, that is, the current binding is the first binding of the card with the application in the user terminal. The user terminal does not store a mapping relationship among the dedicated card information for the card to be bound, the card type of the card to be bound and the life state of the card to be bound. In this case, the user terminal generates the first mapping relationship.

In some other embodiments, the card has ever been bound with the application in the user terminal before but has been deleted, that is, the current binding is the N^{th} binding of the card with the application in the user terminal, where N is an integer greater than 1. In some cases, the user terminal has deleted the mapping relationship between the dedicated card information for the card to be bound, the card type of the card to be bound, and the life state of the card before the current binding. Correspondingly, the user terminal needs to generate the first mapping relationship currently. In other cases, the user terminal does not delete the mapping relationship between the dedicated card information for the card to be bound, the card type of the card to be bound and the life state of the card to be bound before current binding, but only changes the life state of the card to be bound to an invalid state. Correspondingly, the user terminal does not need to newly generate the first mapping relationship currently, and only needs to update the first mapping relationship, that is, update the life state of the card to be bound in the first mapping relationship to a valid state.

In step S205, the life state of the bound card and the first mapping relationship are synchronized to the server.

The server needs to keeps in synchronization with the user terminal in mapping relationship among dedicated card information, card type and life state of each card, so as to avoid an error in a payment transaction process. The method of the synchronization between the user terminal and the server is not limited here.

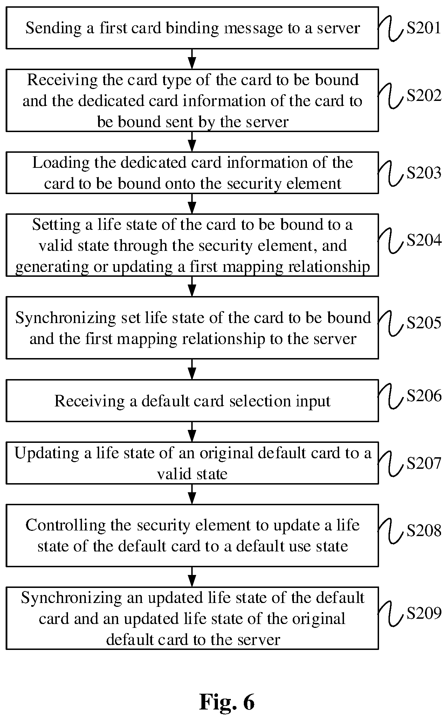

The application in the user terminal may have been bound with multiple cards. When multiple cards have been bound, a card is set as a default card among the multiple cards and will be used directly for a payment transaction. The default card can be changed. Fig. 6 is a flowchart of another embodiment of a card management method according to the first aspect of the present application. Fig. 6 differs from Fig. 5 in that, the card management method shown in Fig. 6 may further include steps S206 to S209.

In step S206, a default card selection input is received.

The default card selection input indicates a selected card as a default card. Specifically, the default card selection input indicates a default card selected currently. The default card selection input may be inputted by the user to the user terminal. The user terminal may determine, according to the default card selection input, a card transaction identifier of the default card indicated by the default card selection input.

In step S207, a life state of an original default card is updated to a valid state.

Before the life state of the default card is updated to a default use state, there may be already one card whose life state is the default use state among the cards that have been bound to the application in the user terminal, and this card is used previously as a default card. In order to distinguish the default card selected previously from the default card selected currently, the default card selected previously is referred to as the original default card here. The life state of the original default card before being updated is the default use state.

In response to the default card selection input, the user terminal can update the life state of the original default card to the valid state through a control instruction, that is, cancel the default use state of the original default card. Specifically, the life state of the original default card is changed from the default use state to the valid state. The card type of the original default card is not limited here, and may be the same as the card type of the default card, or may be different from the card type of the default card.

In some examples, the user terminal can control the security element to cancel the default use state of the original default card through the control instruction. The control instruction may be sent by the server to the user terminal first, and then sent by the user terminal to the security element, so as to control the security element. Specifically, the control instruction may include an APDU instruction, which is not limited here in its contents.

As the life state of the original default card changes, the mapping relationship between the dedicated card information for the original default card, the card type of the original default card and the life state of the original default card is updated accordingly. Specifically, the mapping relationship corresponding to the original default card in the mapping relationship management table can be updated.

In step S208, the security element is controlled to update the life state of the default card to the default use state.

In response to the default card selection input, the user terminal updates the life state of the default card to the default use state. The default card is a card that has been bound to the application in the user terminal. Specifically, the user terminal changes the life state of the default card from the valid state to the default use state.

In some examples, the user terminal can control the security element to update the life state of the default card to the default use state through a control instruction. The control instruction may be sent by the server to the user terminal first, and then sent by the user terminal to the security element, so as to control the security element. Specifically, the control instruction may include an APDU instruction, which is not limited here in its contents.

As the life state of the default card changes, the mapping relationship among the dedicated card information for the default card, the card type of the default card and the life state of the default card is also updated accordingly. Specifically, the mapping relationship corresponding to the default card in the mapping relationship management table can be updated.

In step S209, the updated life state of the default card and the updated life state of the original default card are synchronized to the server.

In order to ensure that card-related information in the user terminal is consistent with card-related information in the server, the server is synchronized with the user terminal when the card-related information in the user terminal changes.

In this embodiment, the default card can be set and changed locally on the user terminal without the user terminal interacting with the server, so setting of the default card can be accelerated and becomes faster and simpler.

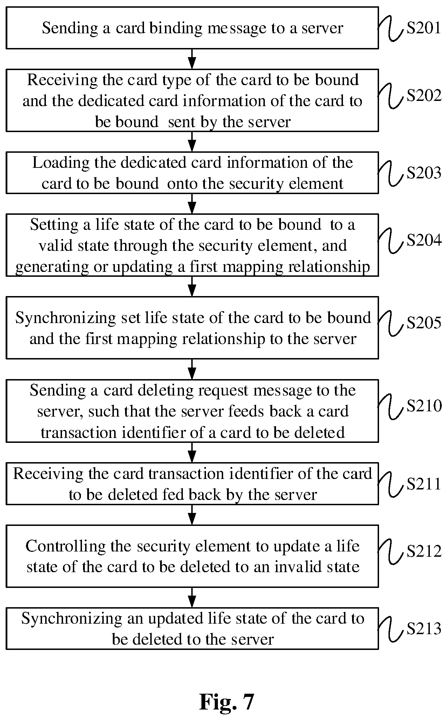

When the user does not desire to use a certain card for a payment transaction, the card that has been bound to the application in the user terminal can be deleted as required, that is, a card deleting process is performed. Fig. 7 is a flowchart of another embodiment of a card management method according to the first aspect of the present application. Fig. 7 differs from Fig. 5 in that, the card management method shown in Fig. 7 may further include steps S210 to S213.

In step S210, a card deleting request message is sent to the server, such that the server feeds back a card transaction identifier of a card to be deleted.

The card deleting request message indicates the card to be deleted. The server receives the card deleting request message, and feeds back the card transaction identifier of the card to be deleted to the user terminal.

In step S211, the card transaction identifier of the card to be deleted fed back by the server is received.

In step S212, the security element is controlled to update a life state of the card to be deleted to an invalid state.

Deleting the card means unbinding the card from the application in the user terminal. The card transaction identifier of the card to be deleted may not be deleted from the user terminal. Since the life status of the card to be deleted has been updated to the invalid state, even if the card transaction identifier of the card to be deleted was retained, it could not be used, and would not affect a payment transaction.

In some examples, the user terminal can control the security element to update the life state of the card to be deleted to the invalid state through the control instruction. The control instruction may be sent by the server to the user terminal first, and then sent by the user terminal to the security element, so as to control the security element. Specifically, the control instruction may include an APDU instruction, which is not limited here in its contents.

In a case that the card to be deleted is the only card that has been bound to the application in the user terminal, in addition to executing the card deleting process, the universal program data package may also be deleted, which is not limited herein.

In some examples, the user terminal may not delete a second mapping relationship, but only update the life state of the card to be deleted in the second mapping relationship. The second mapping relationship includes a mapping relationship among dedicated card information for the card to be deleted, a card type of the card to be deleted, and a life state of the card to be deleted. When the application in the user terminal binds the card again in a case that the second mapping relationship has not been deleted by the user terminal, binding of the card can be quickly achieved by updating the life state of the card in the second mapping relationship.

In some other examples, the user terminal may delete the second mapping relationship. When the application in the user terminal binds the card again, the second mapping relationship can be regenerated.

In some cases, the card deleting process may trigger a default card setting process. For example, the life state of the card to be deleted before being updated is the default use state, the default card setting process is requited in the card deleting process to designate a new default card and update a life state of the designated new default card to the default use state.

In step S213, the updated life state of the card to be deleted is synchronized to the server.

In order to ensure that card-related information in the user terminal is consistent with card-related information in the server, the server is synchronized with the user terminal when the card-related information in the user terminal changes.

In still some other embodiments, the user terminal may desire to bind a card that has been previously deleted. The card transaction identifier of the card is not deleted from the user terminal in the card deleting process and instead only the life state of the card is changed to an invalid state, so the card transaction identifier of the card can still be found in the user terminal, and the mapping relationship among the dedicated card information, the card type and the life state of the card can still be found in the server. Correspondingly, when the user terminal desire to bind a card that has been previously deleted, the user terminal can still use the method in the card binding process in the above embodiments to bind the card again. Compared with binding of a card which has never been bound, binding of a card which has ever been bound does not require regeneration of dedicated card information for card because the dedicated card information allocated by the server for the card just is the dedicated card information previously for the card. Based on the dedicated card information for the card sent by the server, the user terminal can update the life state of the card in the user terminal from the invalid state to the valid state. In a case that the mapping relationship among the dedicated card information, the card type and the life state of the card has not been deleted from the user terminal when the card was deleted, it only needs to update the life state in the mapping relationship. In a case that the mapping relationship among the dedicated card information, the card type and the life state of the card has been deleted from the user terminal when the card was deleted, the mapping relationship among the dedicated card information, the card type and the life state of the card may be regenerated.

In a case that the user reports loss of the card, the user can delete the lost card at any user terminal through logging in to an application or logging into a web page or the like or via a card organization etc., which reduces time required to report the loss of the card.

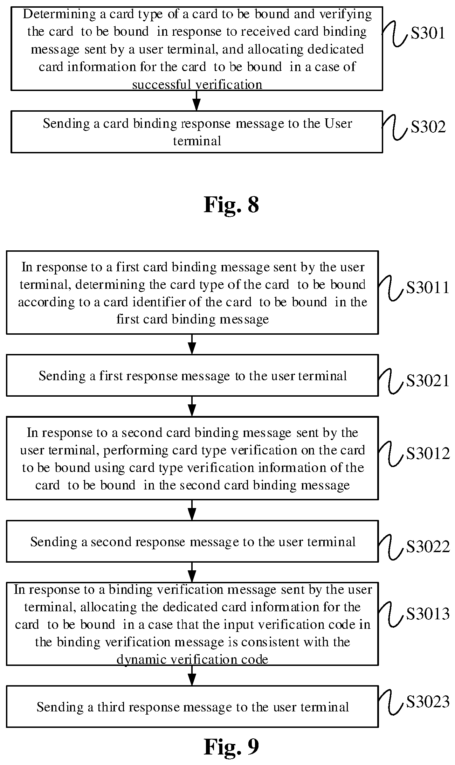

A second aspect of the present application provides a card management method, which is applicable to a server. The server may store the first-type universal personalization data and the second-type universal personalization data. The first-type universal personalization data stored in the server is consistent with the first-type universal personalization data stored in the user terminal, and the second-type universal personalization data stored in the server is consistent with the second-type universal personalization data stored in the user terminal. Fig. 8 is a flowchart of an embodiment of a card management method according to a second aspect of the present application. As shown in Fig. 8, the card management method may include steps S301 and S302.

In step S301, in response to a received card binding message sent by the user terminal, a card type of a card to be bound is determined, the card to be bound is verified, and in a case of successful verification, dedicated card information is allocated for the card to be bound.

The card binding message includes card authentication information of the card to be bound. The card binding message may include multiple messages, each of which may include different card authentication information. The user terminal may send the card binding message via multiple processes. Correspondingly, the server may receive the card binding message via multiple processes. Based on the received message in each of the multiple processes, the server can determine the card type of the card to be bound, and perform verification of the card to be bound. The details about these can be found in the detailed description hereinabove and hereinafter.

In a case that the verification of the card to be bound fails, the server will not allocate the dedicated card information for the card to be bound.

In some examples, the card authentication information may include a card identifier, card type verification information, and an input verification code.

The dedicated card information includes a card transaction identifier. The dedicated card information for the card to be bound together with matching universal personalization data are useable to perform transaction verification of the card to be bound. The matching universal personalization data is the first-type universal personalization data or the second-type universal personalization data that matches the card type of the card to be bound.

The dedicated card information allocated by the server for different cards of the same card type is different. However, different cards of the same card type have the same matching universal personalization data, that is, different cards of the same card type share the same matching universal personalization data.

In some examples, in a case that the card to be bound includes a first card and a second card with a same card type, the dedicated card information for the first card together with target matching universal personalization data are useable to perform transaction verification of the first card, and the dedicated card information for the second card together with the target matching universal personalization data are useable to perform transaction verification of the second card. The target matching universal personalization data is the first-type universal personalization data or the second-type universal personalization data that matches the card type of the first card.

In some examples, the dedicated card information may further includes dedicated personalization data. The details of the dedicated personalization data can be found in relevant descriptions in the above embodiments, and will not be repeated here.

In step S302, a card binding response message is sent to the user terminal.

The card binding response message includes the card type of the card to be bound and dedicated card information for the card to be bound. The card binding response message may include multiple messages, each of which may has different contents. The details about these can be found in the detailed description hereinabove and hereinafter. The server may send the multiple messages to the user terminal via multiple processes, and correspondingly, the user terminal may receive the multiple messages via multiple processes.

The details of the above steps S301 and S302can be found in relevant descriptions in the above embodiments, and will not be repeated here.

In the embodiment of the present application, the server receives the card binding message sent by the user terminal, determines the card type of the card to be bound and performs verification on the card to be bound in response to the card binding message. In a case of successful verification, the server allocates dedicated card information for the card to be bound and sends the dedicated card information to the user terminal, such that the user terminal receives the dedicated card information for the card to be bound. When the card is used for a payment transaction, the user terminal and the server can use the universal personalization data and the dedicated card information for the card to perform transaction verification. The server does not need to repeatedly send to the user terminal the universal personalization data required for transaction verification of a card to be bound in each card binding process, thereby reducing occupation of storage resources of the user terminal and reducing occupation of resources for downloading during a download process.

Moreover, except for the case that the application in the user terminal binds a card for the first time, contents that the server needs to send to the user terminal in the process of binding the card does not include the universal personalization data, which reduces time spent by the user terminal for downloading data. Therefore, binding of the card binding can be accelerated and becomes faster and simpler.

In some other examples, the card binding message includes a first card binding message, a second card binding message and a binding verification message. The card binding response message includes a first response message and a second response message. The card authentication information includes a card identifier, card type verification information and an input verification code. Fig. 9 is a flowchart of another embodiment of a card management method according to the second aspect of the present application. Fig. 9 differs from Fig. 8 in that, step S301 in Fig. 8 can be divided into steps S3011 to S3013 in Fig. 9, and step S302 in Fig. 8 can be divided into steps S3021 to S3023 in Fig. 9.

In step S3011, in response to the first card binding message sent by the user terminal, a card type of a card to be bound is determined according to a card identifier of the card to be bound in the first card binding message.

The first card binding message includes the card identifier of the card to be bound. For different types of cards, their card identifiers have different formats. The server may identify the card type of the card to be bound based on the card identifier of the card to be bound.

In step S3021, a first response message is sent to the user terminal.

Upon determination of the card type of the card to be bound, the first response message is sent to the user terminal in response to the first card binding message sent by the user terminal. The first response message includes the card type of the bound card.

In step S3012, in response to the second card binding message sent by the user terminal, card type verification is performed on the card to be bound by using card type verification information of the card to be bound in the second card binding message.

The second card binding message includes the card type verification information which matches with the card type of the card to be bound.

In some examples, in a case that the card type of the card to be bound is a first-type, the card type verification information includes first-type verification information; and in a case that the card type of the card to be bound is a second-type, the card type verification information includes second-type verification information. The first-type verification information is different from the second-type verification information.

In step S3022, a second response message is sent to the user terminal.

In a case of successful verification of the card type of the card to be bound in response to the second card binding message sent by the user terminal, a second response message is sent to the user terminal. The second response message includes a dynamic verification code.

In step S3013, in response to the binding verification message sent by the user terminal, dedicated card information is allocated for the card to be bound in a case that an input verification code in the binding verification message is consistent with the dynamic verification code.

The binding verification message includes the input verification code. If the input verification code in the binding verification message is consistent with the dynamic verification code, it indicates successful verification of the verification code. Upon successful verification of the verification code, the server allocates dedicated card information for the card to be bound.

In step S3023, a third response message is sent to the user terminal.

Upon successful verification of the verification code of the card to be bound in response to the binding verification message sent by the user terminal, a third response message is sent to the user terminal. The third response message includes the dedicated card information for the card to be bound.

Details of the above steps S3011 to S3013 and steps S3021 to S3023 can be found in relevant descriptions in the above embodiments, and will not be repeated here.

In some examples, in a case that the user terminal performs card binding for the first time, the server may send a universal program data package to the user terminal.

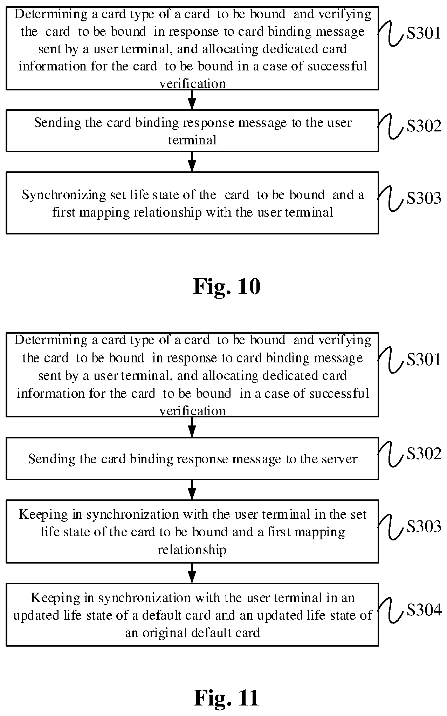

In order to ensure that the data in the user terminal is consistent with the data in the server, data synchronization may be performed between the user terminal and the server. Fig. 10 is a flowchart of another embodiment of a card management method according to the second aspect of the present application. Fig. 10 differs from Fig. 8 in that, the card management method shown in Fig. 10 may further include step S303.

In step S303, a life state of the card to be bound and a first mapping relationship are kept in synchronization with the user terminal.

The first mapping relationship includes a mapping relationship among the dedicated card information for the card to be bound, the card type of the card to be bound, and the life state of the card to be bound.

Details of step S303 can be found in relevant descriptions in the above embodiments, and will not be repeated here.

The application in the user terminal may have been bound with multiple cards. When multiple cards have been bound, a card is set as a default card among the multiple cards, and will be used directly for a payment transaction. The default card can be changed. Fig. 11 is a flowchart of another embodiment of a card management method according to the second aspect of the present application. Fig. 11 differs from Fig. 10 in that, the card management method shown in Fig. 11 may further include step S304.

In step S304, an updated life state of a default card and an updated life state of an original default card are kept in synchronization with the user terminal.

The life state of the original default card before being updated is the default use state.

Details of step S304can be found in relevant descriptions in the above embodiments, and will not be repeated here.

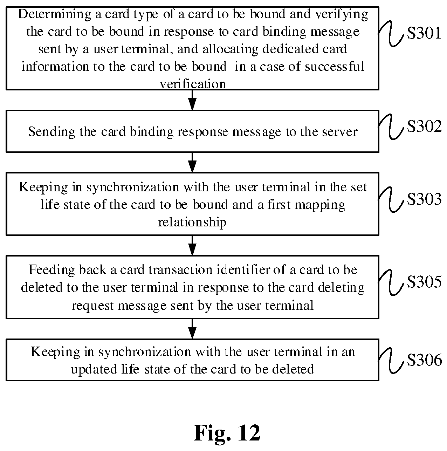

When the user does not desire to use a certain card for a payment transaction, the card that has been bound to the application in the user terminal can be deleted as required, that is, a card deleting process is performed. Fig. 12 is a flowchart of another embodiment of a card management method according to a second aspect of the present application. Fig. 12 differs from Fig. 10 in that, the card management method shown in Fig. 12 may further include steps S305 and S306.

In step S305, in response to a card deleting request message sent by the user terminal, a card transaction identifier of a card to be deleted is fed back to the user terminal.

The card deleting request message indicates the card to be deleted.

In step S306, updated life state of the card to be deleted is kept in synchronization with the user terminal.

In some examples, the server may update the life state of the card to be deleted in the second mapping relationship, but not delete the second mapping relationship. In some other examples, the server may also delete the second mapping relationship, which is not limited herein.

Details of the above steps S305 and S306can be found in relevant descriptions in the above embodiments, which will not be repeated here.

In the above embodiments, in order to ensure that card-related information in the server is consistent with card-related information in the user terminal, the server is kept in synchronization with the user terminal when the card-related information in the user terminal changes, such that the card-related information in the server is consistent with the card-related information in the user terminal. The synchronization method between the server and the user terminal is not limited here.

In order to further illustrate the steps involved in the card management method, the following description takes the user terminal including the security element and installed with the application program and the server including the back-end server for the application, the TSM server and the TSP server as an example. The application may specifically be an electronic wallet application.

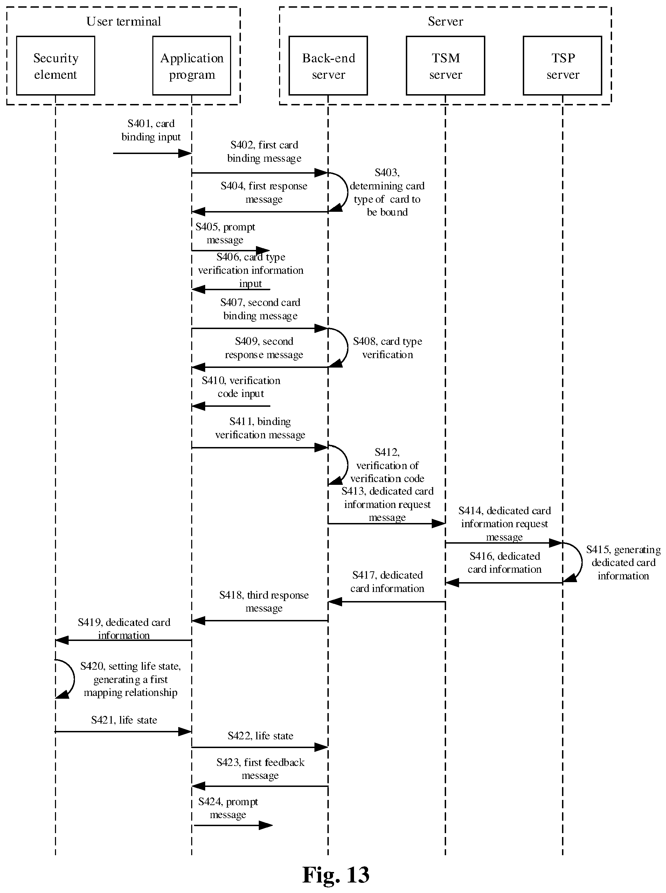

Fig. 13 is a flowchart of an example of a card binding process according to an embodiment of the present application. The card has not been bound with the application in the user terminal before. As shown in Fig. 13, the card binding process may include steps S401 to S424.

In step S401, the application receives a card binding input.

The card binding input may include a card identifier of a card to be bound.

In step S402, the application sends a first card binding message to the back-end server.

The first card binding message includes the card identifier of the card to be bound.

In step S403, the back-end server determines a card type of the card to be bound according to the card identifier of the card to be bound.

In step S404, the back-end server sends a first response message to the application.

The first response message includes the card type of the card to be bound.

In step S405, the application sends a prompt message according to the card type of the card to be bound, to prompt a user to input card type verification information corresponding to the card type of the card to be bound.

In step S406, the application receives the input of card type verification information.

In step S407, the application sends a second card binding message to the back-end server.

The second card binding message includes card type verification information of the card to be bound.

In step S408, the back-end server performs card type verification according to the card type verification information of the card to be bound.

In step S409, in a case of successful verification of the card type, the back-end server sends a second response message to the application.

The second response message includes a dynamic verification code.

In step S410, the application receives an input verification code.

In step S411, the application sends a binding verification message to the back-end server.

The binding verification message includes the input verification code.

In step S412, the back-end server performs, according to the input verification code, verification of the verification code.

In step S413, in a case of successfully verification of the verification code, the back-end server sends a dedicated card information request message to the TSM server.

In step S414, the TSM server sends the dedicated card information request message to the TSP server.

In step S415, the TSP server generates dedicated card information for the card to be bound.

In step S416, the TSP server sends the dedicated card information for the card to be bound to the TSM server.

In step S417, the TSM server sends the dedicated card information for the card to be bound to the back-end server.

In step S418, the back-end server sends a third response message to the application.

The third response message includes the dedicated card information for the card to be bound.

In step S419, the application sends the dedicated card information for the card to be bound to the security element.

In step S420, the security element stores the dedicated card information for the card to be bound, sets a life state of the card to be bound, and generates a first mapping relationship.

In step S421, the security element sends the life state of the card to be bound to the application.

In step S422, the application sends the life state of the card to be bound to the back-end server.

In step S423, the back-end server sends a first feedback message to the application.

The first feedback message indicates that the life state of the card to be bound has been successfully synchronized in the server.

In step S424, the application sends a prompt message to prompt the user that the card has been successfully bound.

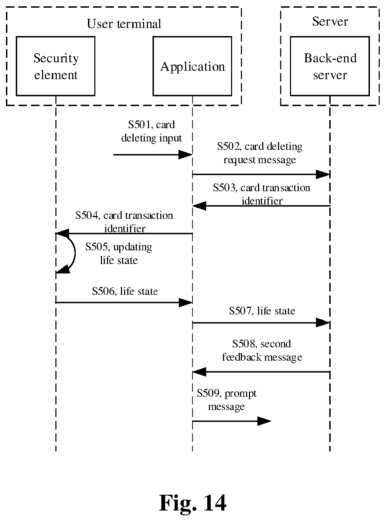

Fig. 14 is a flowchart of an example of a card deleting process according to an embodiment of the present application. As shown in Fig. 14, the card deleting process may include steps S501 to S509.

In step S501, the application receives a card deleting input.

The card deleting input selects a card to be deleted.

In step S502, the application sends a card deleting request message to the back-end server.

The card deleting request message indicates the card to be deleted.

In step S503, the back-end server feeds back a card transaction identifier of the card to be deleted to the application.

In step S504, the application sends the card transaction identifier of the card to be deleted to the security element.

In step S505, the security element updates a life state of the card to be deleted to an invalid state according to a mapping relationship corresponding to the card to be deleted.

In step S506, the security element sends the life state of the card to be deleted to the application.

In step S507, the application sends the life state of the card to be deleted to the back-end server.

In step S508, the back-end server sends a second feedback message to the application.

The second feedback message indicates that the life state of the card to be deleted has been successfully synchronized in the server.

In step S509, the application sends a prompt message to prompt a user that the card has been successfully deleted.

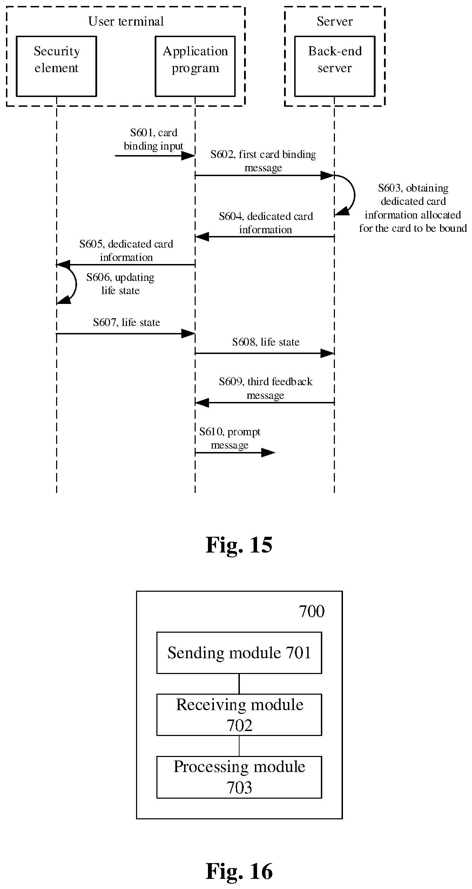

Fig. 15 is a flowchart of another example of a card binding process according to an embodiment of the present application. The card is a card that has ever been bound to the application in the user terminal but has been deleted. As shown in Fig.15, the card binding process may include steps S601 to S610.

In step S601, the application receives a card binding input.

The card binding input may include a card identifier of a card to be bound.

In step S602, the application sends a first card binding message to the back-end server.

The first card binding message includes the card identifier of the card to be bound.

In step S603, the back-end server determines, according to the card identifier, that the card to be bound has been deleted, and obtains dedicated card information that has been allocated to the card to be bound, without need to regenerate dedicated card information for the card to be bound.

In step S604, the back-end server sends the dedicated card information for the card to be bound to the application.

In step S605, the application sends the dedicated card information for the card to be bound to the security element.

In step S606, the security element stores the dedicated card information for the card to be bound, and updates a life state of the card to be bound.

In step S607, the security element sends the life state of the card to be bound to the application.

In step S608, the application sends the life state of the card to be bound to the back-end server.

In step S609, the back-end server sends a third feedback message to the application.

The third feedback message indicates that the life state of the card to be bound has been successfully synchronized in the server.

In step S610, the application sends a prompt message to prompt a user that the card has been successfully bound.

A third aspect of the present application provides a user terminal. The user terminal includes a security element. The security element stores first-type universal personalization data and second-type universal personalization data. Fig. 16 is a schematic structural diagram of an embodiment of the user terminal according to the third aspect of the present application. As shown in Fig. 16, the user terminal 700 may include a sending module 701, a receiving module 702 and a processing module 703.

The sending module 701 is configured to send a card binding message to a server, such that the server determines a card type of a card to be bound, and in a case of successful verification of the card to be bound, allocates dedicated card information for the card to be bound.

The card binding message includes card authentication information of the card to be bound. The dedicated card information includes a card transaction identifier. In some examples, the dedicated card information also includes dedicated personalization data.

The receiving module 702 is configured to receive the card type of the card to be bound and the dedicated card information for the card to be bound sent by the server.

The processing module 703 is configured to load the dedicated card information for the card to be bound onto the security element.

The dedicated card information for the card to be bound together with matching universal personalization data are useable to perform transaction verification of the bound card. The matching universal personalization data is the first-type universal personalization data or the second-type universal personalization data that matches the card type of the bound card. A first mapping relationship includes a mapping relationship among the dedicated card information for the card to be bound, the card type of the card to be bound, and a life state of the card to be bound.

In some examples, in a case that the d card to be bound includes a first card and a second card with a same card type, the dedicated card information for the first card together with target matching universal personalization data are useable to perform transaction verification of the first card, and the dedicated card information for the second card together with the target matching universal personalization data are useable to perform transaction verification of the second card. The target matching universal personalization data is the first-type universal personalization data or the second-type universal personalization data that matches the card type of the first card.

In the embodiment of the application, the security element of the user terminal stores the first-type universal personalization data and the second-type universal personalization data. In a process of binding a card, the user terminal interacts with the server through the card binding message to obtain the dedicated card information allocated for the card by the server. The obtained dedicated card information is loaded onto the security element. In the process of binding the card, there is no need to download all the personalization data required for transaction verification of the card. When the card is used for a payment transaction, the user terminal and the server can use the matching universal personalization data and the dedicated card information for the card for transaction verification. The user terminal does not need to repeatedly store the universal personalization data required for transaction verification for each card, thereby reducing occupation of storage resources of the user terminal.

Moreover, except for the case that the application in the user terminal binds a card for the first time, contents needed to be downloaded by the user terminal in the process of binding the card does not include the universal personalization data, which reduces time spent by the user terminal for downloading data. Therefore, binding of the card can be accelerated, and becomes faster and simpler.

In some examples, the card binding message includes a first card binding message, a second card binding message and a binding verification message. The card authentication information includes a card identifier, card type verification information and an input verification code.

The sending module 701 may be further configured to: send the first card binding message to the server, the first card binding message including the card identifier of the card to be bound; send the second card binding message to the server upon reception of a first response message sent by the server, the first response message including the card type of the card to be bound, and the second card binding message including the card type verification information of the card to be bound; and send the binding verification message to the server upon reception of a second response message sent by the server, the second response message including a dynamic verification code, and the binding verification message including the input verification code.

Specifically, in a case that the card type of the card to be bound is a first-type, the card type verification information includes a first-type verification information; and in a case that the card type of the card to be bound is a second-type, the card type verification information includes a second-type verification information. The first-type verification information is different from the second-type verification information.

In some examples, the receiving module 702 may be further configured to receive a universal program data package sent by the server in a case that the user terminal performs binding of the card for the first time.

The processing module 703 may be further configured to load the universal program data package onto the security element.

In some examples, the processing module 703 may be further configured to set a life state of the card to be bound to a valid state through the security element, and generate or update the first mapping relationship.

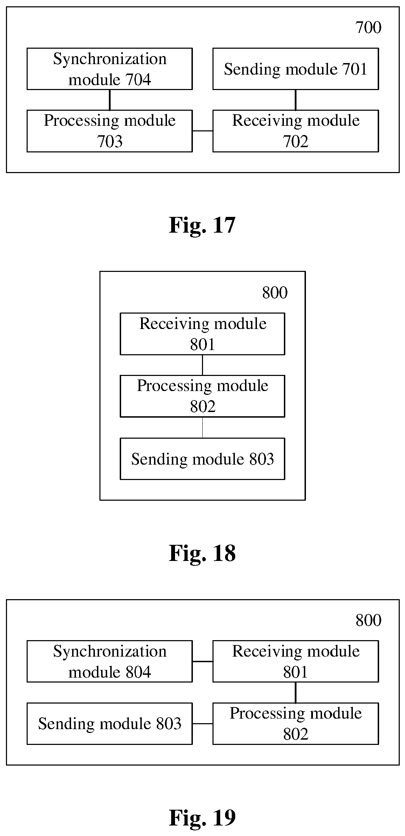

Fig. 17 is a schematic structural diagram of another embodiment of the user terminal according to the third aspect of the present application. Fig. 17 differs from Fig. 16 in that, the user terminal 700 may further include a synchronization module 704.

The synchronization module 704 is configured to synchronize the life state of the card to be bound and the first mapping relationship to the server.

In some examples, the receiving module 702 may be further configured to receive a default card selection input.

The default card selection input is provided to indicate a selected default card.

The processing module 703 may be further configured to control the security element to update the life state of an original default card to a valid state.

The life state of the original default card before being updated is a default use state.

The processing module 703 may be further configured to control the security element to update the life state of the default card to the default use state.

The synchronization module 704 may be further configured to synchronize the updated life state of the default card and the updated life state of the original default card to the server.

In some examples, the sending module 701 may be further configured to send a card deleting request message to the server such that the server feeds back a card transaction identifier of a card to be deleted.

The card deleting request message indicates the card to be deleted.

The receiving module 702 may be further configured to receive the card transaction identifier of the card to be deleted fed back by the server.

The processing module 703 may be further configured to control the security element to update a life state of the card to be deleted to an invalid state.

The synchronization module 704 may be further configured to synchronize the updated life state of the card to be deleted to the server.

In some examples, the processing module 703 may be further configured to delete a second mapping relationship, the second mapping relationship including a mapping relationship among dedicated card information for the card to be deleted, a card type of the card to be deleted, and a life state of the card to be deleted.

A fourth aspect of the present application provides a server. The server stores the first-type universal personalization data and the second-type universal personalization data. Fig. 18 is a schematic structural diagram of an embodiment of the server according to the fourth aspect of the present application. As shown in Fig. 18, the server 800 may include a receiving module 801, a processing module 802 and a sending module 803.

The receiving module 801 is configured to receive the card binding message sent by the user terminal.

The card binding message includes card authentication information of the card to be bound.

The processing module 802 is configured to determine a card type of the card to be bound and verifying the card to be bound in response to the card binding message, and allocate dedicated card information for the card to be bound in a case of successful verification.

The dedicated card information includes a card transaction identifier. The dedicated card information for the card to be bound together with matching universal personalization data are useable to perform transaction verification of the bound card. The matching universal personalization data is the first-type universal personalization data or the second-type universal personalization data that matches the card type of the bound card.

In some examples, the dedicated card information further includes dedicated personalization data.

The sending module 803 is configured to send a card binding response message to the user terminal.

The card binding response message includes the card type of the d card to be bound and dedicated card information for the card to be bound.

In some examples, in a case that the card to be bound includes a first card and a second card with a same card type, the dedicated card information for the first card together with target matching universal personalization data are useable to perform transaction verification of the first card, and the dedicated card information for the second card together with the target matching universal personalization data are useable to perform transaction verification of the second card. The target matching universal personalization data is the first-type universal personalization data or the second-type universal personalization data that matches the card type of the first card.

In the embodiment of the present application, the server receives the card binding message sent by the user terminal, determines the card type of a card to be bound and verifies the card to be bound in response to the card binding message, and allocates dedicated card information for the card to be bound in a case of successful verification. The server sends the dedicated card information for the card to be bound to the user terminal, such that the user terminal receives the dedicated card information for the card to be bound. When the card is used for a payment transaction, the user terminal and the server can use the matching universal personalization data and the dedicated card information for the card for transaction verification. The server does not need to repeatedly send to the user terminal the universal personalization data required for transaction verification of the card to be bound in each card binding process, thereby reducing occupation of storage resources of the user terminal and reducing occupation of resources for downloading a the download process.

Moreover, except for the case that the application in the user terminal binds a card for the first time, contents that the server needs to send to the user terminal in the process of binding the card does not include the universal personalization data, which reduces time spent by the user terminal for downloading data. Therefore, binding of the card can be accelerated and becomes faster and simpler.

In some examples, the card binding response message includes a first response message, a second response message and a third response message. The card authentication information includes a card identifier, card type verification information and an input verification code.

The sending module 803 may be configured to: send a first response message to the user terminal upon determination of the card type of the card to be bound in response to a first card binding message sent by the user terminal, the first response message including the card type of the card to be bound, and the first card binding message including the card identifier of the card to be bound; send a second response message to the user terminal upon successful verification of the card type of the card to be bound in response to a second card binding message sent by the user terminal, the second card binding message including the card type verification information that matches the card type of the card to be bound, and the second response message including a dynamic verification code; and send a third response message to the user terminal upon successful verification of the verification code of the card to be bound in response to the binding verification message sent by the user terminal, the binding verification message including the input verification code, and the third response message including the dedicated card information for the card to be bound.

In some examples, the card binding message includes a first card binding message, a second card binding message and a binding verification message.

The processing module 802 may be configured to: determine a card type of the card to be bound according to the card identifier of the card to be bound in the first card binding message; perform verification on the card type of the card to be bound using card type verification information of the card to be bound in the second card binding message; and allocate the dedicated card information for the card to be bound in a case that the input verification code in the binding verification message is consistent with the dynamic verification code.

Specifically, in a case that the card type of the card to be bound is a first-type, the card type verification information includes first-type verification information; and in a case that the card type of the card to be bound is a second-type, the card type verification information includes second-type verification information. The first-type verification information is different from the second-type verification information.

In some examples, the sending module 803 may be further configured to send a universal program data package to the user terminal in a case that the user terminal performs binding of the card for the first time.

Fig. 19 is a schematic structural diagram of another embodiment of the server according to the fourth aspect of the present application. Fig. 19 differs from Fig. 18 in that, the server 800 shown in Fig. 19 may further include a synchronization module 804.

The synchronization module 804 is configured to keep in synchronization with the user terminal in the life state of the card to be bound and a first mapping relationship.

The first mapping relationship includes a mapping relationship among the dedicated card information for the card to be bound, the card type of the card to be bound, and the life state of the card to be bound.

In some examples, the synchronization module 804 may be further configured to keep in synchronization with the user terminal in updated life state of a default card and updated life state of an original default card, wherein the life state of the original default card before being updated is a default use state.

In some examples, the sending module 803 may be further configured to feed back a card transaction identifier of a card to be deleted to the user terminal in response to a card deleting request message sent by the user terminal.

The card deleting request message indicates a card to be deleted.

The synchronization module 804 may be further configured to keep synchronization with the user terminal in updated life state of the card to be deleted.

In some examples, the processing module 802 may be further configured to delete a second mapping relationship.

The second mapping relationship includes a mapping relationship among dedicated card information for the card to be deleted, a card type of the card to be deleted, and a life state of the card to be deleted.

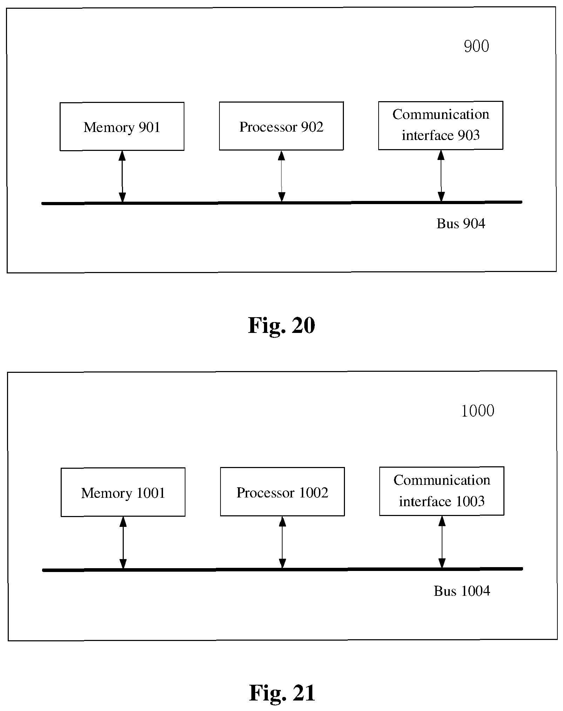

A fifth aspect of the present application provides a user terminal. Fig. 20 is a schematic structural diagram of an embodiment of a user terminal according to the fifth aspect of the present application. As shown in Fig. 20, the user terminal 900 includes a memory 901, a processor 902, and computer programs stored on the memory 901 and executable on the processor 902.

In one example, the processor 902 may include a central processing unit (CPU), an Application Specific Integrated Circuit (ASIC), or one or more integrated circuits configured to implement the embodiments of the present application.

The memory 901 may include a Read-Only Memory (ROM), a Random Access Memory (RAM), a magnetic disk storage medium device, an optical storage medium device, a flash memory device, an electrical, optical or any other physical/tangible memory storage device. Accordingly, the memory generally includes one or more tangible (non-transitory) computer-readable storage media (for example, memory devices) encoded with software including computer-executable instructions, and the software, when executed (for example, by one or more processors), is operable to perform the operations described with reference to the card management method according to the first aspect of the present application.

The processor 902 reads executable program codes stored in the memory 901 and executes computer programs corresponding to the executable program codes to implement the card management method according to the first aspect of the embodiments.

In one example, the user terminal 900 may further include a communication interface 903 and a bus 904. As shown in Fig. 20, the memory 901, the processor 902, and the communication interface 903 are connected through the bus 904 and achieve mutual communication therebetween.

The communication interface 903 is mainly configured to achieve communication between various modules, apparatus, units and/or devices in the embodiments of the present application. An input device and/or an output device may also be connected through the communication interface 903.

The bus 904 includes hardware, software, or both of them, and is configured to couple the various components of the user terminal 900 to each other. As an example rather than limitation, the bus 904 may include an Accelerated Graphics Port (AGP) or any other graphics bus, an Enhanced Industry Standard Architecture (EISA) bus, a Front Side Bus (FSB), a Hyper Transport (HT) interconnect, an Industrial Standard Architecture (ISA) bus, a wireless band interconnect, a Low Pin Count (LPC) bus, a memory bus, an Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local Bus (VLB) bus or any other suitable bus or any combination of two or more of the above. When appropriate, the bus 904 may include one or more buses. Although the embodiments of the present application describe and illustrate a particular bus, any suitable bus or interconnect may be considered in the present application.

A sixth aspect of the present application provides a server. Fig. 21 is a schematic structural diagram of an embodiment of a server according to the sixth aspect of the present application. As shown in Fig. 21, the server 1000 includes a memory 1001, a processor 1002, and computer programs stored on the memory 1001 and executable on the processor 1002.

In one example, the processor 1002 may include a central processing unit (CPU), an Application Specific Integrated Circuit (ASIC), or one or more integrated circuits configured to implement the embodiments of the present application.

The memory 1001 may include a Read-Only Memory (ROM), a Random Access Memory (RAM), a magnetic disk storage medium device, an optical storage medium device, a flash memory device, an electrical, optical or any other physical/tangible memory storage device. Accordingly, the memory generally includes one or more tangible (non-transitory) computer-readable storage media (for example, memory devices) encoded with software including computer-executable instructions, and the software, when executed (for example, by one or more processors), is operable to perform the operations described with reference to the card management method according to the second aspect of the present application.

The processor 1002 reads executable program codes stored in the memory 1001 and executes computer programs corresponding to an executable program codes to implement the card management method according to the second aspect of the embodiments.

In one example, the server 1000 may further include a communication interface 1003 and a bus 1004. As shown in Fig. 21, the memory 1001, the processor 1002, and the communication interface 1003 are connected through the bus 1004 and achieve mutual communication therebetween.

The communication interface 1003 is mainly configured to achieve communication between various modules, apparatus, units and/or devices in the embodiments of the present application. An input device and/or an output device may also be connected through the communication interface 1003.

The bus 1004 includes hardware, software, or both of them, and is configured to couple various components of the server 1000 to each other. As an example rather than limitation, the bus 1004 may include an Accelerated Graphics Port (AGP) or any other graphics bus, an Enhanced Industry Standard Architecture (EISA) bus, a Front Side Bus (FSB), a Hyper Transport (HT) interconnect, an Industrial Standard Architecture (ISA) bus, a wireless band interconnect, a Low Pin Count (LPC) bus, memory bus, an Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local Bus (VLB) bus or any other suitable bus or any combination of two or more of the above. When appropriate, the bus 1004 may include one or more buses. Although the embodiments of the present application describe and illustrate a particular bus, any suitable bus or interconnect may be considered in the present application.

A seventh aspect of the present application further provides a card management system. The card management system may include the user terminal and the server in the above embodiments. For their specific contents, they may be the same as the detailed description in the above embodiments, and will not be repeated here.

An eighth aspect of the present application provides a computer storage medium having computer program instructions stored thereon. The computer program instructions, when executed by a processor, are operable to implement the card management method according to the above embodiments, and achieve the same technical effects, which will not be repeated here. The computer storage medium may include a non-transitory computer-readable storage medium, such as a Read-Only Memory (ROM), a Random Access Memory (RAM), a magnetic disk or an optical disk, and so on, which is not limited here.

It should be clear that, the embodiments in the specification are described in a progressive way, and the same or similar parts of each embodiment may be referred to each other. Each embodiment focuses on differences from other embodiments. For the embodiments of the user terminal, the server, the system and the computer storage medium, reference can be made to the description of related parts in the embodiments of the method. The application is not limited to the specific steps and structures described above and shown in the figures. Those skilled in the art can make various changes, modifications and additions, or change the order between steps after understanding the gist of the application. Moreover, for the sake of brevity, a detailed description of known methods and technologies is omitted here.

Aspects of the present application are described above with reference to flowcharts and/or block diagrams of methods, devices (systems) and computer program products according to the embodiments of the present application. It should be understood that, each block in the flowcharts and/or block diagrams and a combination of any of blocks in the flowcharts and/or block diagrams may be implemented by computer program instructions. These computer program instructions may be provided to a processor of a general purpose computer, a special purpose computer, or any other programmable data processing apparatus to produce a machine such that execution of the instructions via the processor of the computer or any other programmable data processing apparatus enables implementation of the functions/acts specified in one or more blocks in the flowcharts and/or block diagrams. Such processor may be but is not limited to a general purpose processor, a special purpose processor, an application specific processor, or a field programmable logic circuit. It should also be understood that, each block in the block diagrams and/or the flowcharts and a combination of any of blocks in the block diagrams and/or the flowcharts may be implemented by special purpose hardware that performs specified functions or actions, or by a combination of the special purpose hardware and computer instructions.

Those skilled in the art should understand that, the embodiments are all illustrative rather than restrictive. Different technical features recited in different embodiments can be combined to achieve beneficial effects. Those skilled in the art should be able to understand and implement other modified embodiments of the disclosed embodiments on the basis of studying the drawings, the description, and the claims. In the claims, the term "including" does not exclude other devices or steps, the numeral word "a/an" does not exclude a plurality of the involved items; the terms "first" and "second" are used to indicate names and not to indicate any particular order. Any reference signs in the claims should not be construed as limiting the protection scope. The functions of several parts recited in the claims can be implemented by a single hardware or software module. Some technical features are recited in different dependent claims, but it does not mean that these technical features cannot be combined to obtain beneficial effects.

## Claims

1. A card management method, applicable to a user terminal (11,700), the user terminal including a security element which stores first-type universal personalization data which is a first part of personalization data for transaction verification of a first type of cards and second-type universal personalization data which is a first part of personalization data for transaction verification of a second type of cards, different cards of the first type share the same first-type universal personalization data and different cards of the second type share the same second-type universal personalization data, the method comprising:
sending (S201), to a server (12), a card binding message including card authentication information of a card to be bound in an application of the user terminal such that the server determines a card type of the card to be bound and allocates dedicated card information for the card to be bound in a case of successful verification of the card to be bound,
wherein the dedicated card information comprises a card transaction identifier and dedicated personalization data for the card to be bound, the card transaction identifier being a token for the card to be bound and the dedicated personalization data for the card to be bound being a second part of personalization data for transaction verification of the card to be bound;
receiving (S202), from the server, the card type of the card to be bound and the dedicated card information for the card to be bound, without need to download the universal personalization data corresponding to the determined card type of the card to be bound, which universal personalization data is already stored in the security element; and
loading (S203) the dedicated card information for the card to be bound onto the security element to bind the card to be bound in the application, wherein the dedicated card information for the bound card together with one of the first-type universal personalization data and the second-type universal personalization data that is stored in the security element and matches the card type are useable to perform transaction verification of the bound card.

2. The method according to claim 1, wherein in a case that the card to be bound comprises a first card and a second card with a same card type, the dedicated card information for the first card together with one of the first-type universal personalization data and the second-type universal personalization data that matches the card type are useable to perform transaction verification of the first card when the first card is bound, and the dedicated card information for the second card together with the one of the first-type universal personalization data and the second-type universal personalization data that matches the card type are useable to perform transaction verification of the second card when the second card is bound.

3. The method according to claim 1, further comprising setting a life state of the card to a valid state through the security element, and generating or updating a first mapping relationship, wherein the first mapping relationship comprises a mapping relationship among the dedicated card information for the card, the card type of the card, and the life state of the card.

4. The method according to claim 3, further comprising synchronizing (S205) the set life state of the card and the first mapping relationship to the server.

5. The method according to claim 1, wherein the card binding message comprises a first card binding message, a second card binding message and a binding verification message, and the card authentication information comprises a card identifier of the card to be bound, card type
verification information corresponding to the card type of the card to be bound and an input verification code; and
wherein the sending of the card binding message to the server comprises:
sending (S2011) the first card binding message to the server, the first card binding message comprising the card identifier of the card to be bound;
sending (S2012) the second card binding message to the server upon reception of a first response message sent by the server, the first response message comprising the card type of the card to be bound, and the second card binding message comprising the card type verification information corresponding to the card type of the card to be bound; and
sending (S2013) the binding verification message to the server upon reception of a second response message sent by the server, the second response message comprising a dynamic verification code, and the binding verification message comprising the input verification code.

6. The method according to claim 1, wherein in a case that the user terminal performs card binding for the first time, the method further comprises:
receiving a universal program data package sent by the server; and
loading the universal program data package onto the security element.

7. The method according to claim 3, further comprising:
receiving (S206) a default card selection input which indicates a selected default card from multiple cards which have been bound;
controlling (S207) the security element to update a life state of an original default card to a valid state, wherein the life state of the original default card before being updated is a default use state;
controlling (S208) the security element to update a life state of the selected default card to the default use state; and
synchronizing (S209) the updated life state of the selected default card and the updated life state of the original default card to the server.

8. The method according to claim 3, further comprising:
sending (S210) a card deleting request message to the server such that the server feeds back a card transaction identifier of a card to be deleted among multiple cards which have been bound, the card deleting request message indicating the card to be deleted;
receiving (S211) the card transaction identifier of the card to be deleted fed back by the server;
controlling (S212) the security element to update a life state of the card to be deleted to an invalid state; and
synchronizing (S213) the updated life state of the card to be deleted to the server.

9. The method according to claim 8, wherein after the receiving of the card transaction identifier of the card to be deleted fed back by the server, the method further comprises:
deleting a second mapping relationship through the security element, the second mapping relationship comprising a mapping relationship among dedicated card information for the card to be deleted, a card type of the card to be deleted, and the life state of the card to be deleted.

10. A user terminal (11,700), comprising a security element which stores first-type universal personalization data which is a first part of personalization data for transaction verification of a first type of cards and second-type universal personalization data which is a first part of personalization data for transaction verification of a second type of cards, different cards of the first type share the same first-type universal personalization data and different cards of the second type share the same second-type universal personalization data;
wherein the user terminal comprises:
a sending module (701) configured to send, to a server (12),
a card binding message including card authentication information of a card to be bound in an application of the user terminal such that the server determines a card type of the card to be bound, and in a case of successful verification of the card to be bound, allocates dedicated card information for the card to be bound in a case of successful verification of the card to be bound, wherein the dedicated card information comprises a card transaction identifier and dedicated personalization data for the card to be bound, the card transaction identifier being a token for the card and the dedicated personalization data for the card to be bound being a second part of personalization data for transaction verification of the card to be bound;
a receiving module (702) configured to receive, from the server, the card type of the card and the dedicated card information for the card to be bound, without need to download corresponding universal personalization data for the card to be bound from the server, which universal personalization data is already stored in the security element; and
a processing module (703) configured to load the dedicated card information for the card to be bound onto the security element to bind the card to be bound in the application, wherein the dedicated card information for the bound card together with one of the first-type universal personalization data and second-type universal personalization data that is stored in the security element and matches the card type of the bound card are useable to perform transaction verification of the bound card.

11. A user terminal (900), comprising a processor (902) and a memory (901) storing computer program instructions, wherein the processor executes the computer program instructions to implement the card management method according to any one of claims 1 to 9.

12. A computer storage medium, storing computer program instructions, wherein the computer program instructions are executed by a processor to perform the card management method according to any one of claims 1 to 9.

## Patentansprüche

1. Kartenverwaltungsverfahren, das auf ein Benutzerendgerät (11, 700) anwendbar ist, wobei das Benutzerendgerät Folgendes umfasst:
ein Sicherheitselement, das universelle Personalisierungsdaten eines ersten Typs, die einen ersten Teil der
Personalisierungsdaten zur Transaktionsverifizierung eines ersten Kartentyps darstellen, sowie universelle Personalisierungsdaten eines zweiten Typs, die einen ersten Teil der Personalisierungsdaten zur Transaktionsverifizierung eines zweiten Kartentyps darstellen, speichert, wobei verschiedene Karten des ersten Typs dieselben universellen Personalisierungsdaten des ersten Typs und verschiedene Karten des zweiten Typs dieselben universellen Personalisierungsdaten des zweiten Typs gemeinsam nutzen, wobei das Verfahren Folgendes umfasst:
Senden (S201) einer Kartenbindungsnachricht, die Kartenauthentifizierungsinformationen einer in einer Anwendung des Benutzerendgeräts zu bindenden Karte enthält, an einen Server (12), sodass der Server einen Kartentyp der zu bindenden Karte ermittelt und der zu bindenden Karte dedizierte Karteninformationen zuweist, falls die Verifizierung der zu bindenden Karte erfolgreich ist, wobei die dedizierten Karteninformationen eine Kartentransaktionskennung und dedizierte Personalisierungsdaten für die zu bindende Karte umfassen, wobei die Kartentransaktionskennung ein Token für die zu bindende Karte ist und die dedizierten Personalisierungsdaten für die zu bindende Karte einen zweiten Teil der Personalisierungsdaten zur Transaktionsverifizierung der zu bindenden Karte darstellen;
Empfangen (S202), vom Server, des Kartentyps der zu bindenden Karte und der dedizierten Karteninformationen für die zu bindende Karte, ohne dass die dem ermittelten Kartentyp der zu bindenden Karte entsprechenden universellen Personalisierungsdaten heruntergeladen werden müssen, wobei diese universellen Personalisierungsdaten bereits im Sicherheitselement gespeichert sind; und
Laden (S203) der dedizierten Karteninformationen für die zu bindende Karte in das Sicherheitselement, um die zu bindende Karte in der Anwendung zu binden, wobei die dedizierten Karteninformationen für die gebundene Karte zusammen mit entweder den universellen Personalisierungsdaten des ersten Typs oder den universellen Personalisierungsdaten des zweiten Typs, die im Sicherheitselement gespeichert sind und dem Kartentyp entsprechen, zur Durchführung einer Transaktionsverifizierung der gebundenen Karte verwendet werden können.

2. Verfahren nach Anspruch 1, wobei in dem Fall, dass die zu bindende Karte eine erste Karte und eine zweite Karte desselben Kartentyps umfasst, die dedizierten Karteninformationen für die erste Karte zusammen mit entweder den universellen Personalisierungsdaten des ersten Typs oder den universellen Personalisierungsdaten des zweiten Typs, die dem Kartentyp entsprechen, zur Durchführung einer Transaktionsverifizierung der ersten Karte verwendet werden können, wenn die erste Karte gebunden wird, und die dedizierten Karteninformationen für die zweite Karte zusammen mit entweder den universellen Personalisierungsdaten des ersten Typs oder den universellen Personalisierungsdaten des zweiten Typs, die dem Kartentyp entsprechen, zur Durchführung einer Transaktionsverifizierung der zweiten Karte verwendet werden können, wenn die zweite Karte gebunden wird.

3. Verfahren nach Anspruch 1, ferner umfassend: Setzen eines Lebensstatus der Karte auf einen gültigen Status über das Sicherheitselement, und Erzeugen oder Aktualisieren einer ersten Zuordnungsbeziehung, wobei die erste Zuordnungsbeziehung eine Zuordnungsbeziehung zwischen den dedizierten Karteninformationen für die Karte, dem Kartentyp der Karte und dem Lebensstatus der Karte umfasst.

4. Verfahren nach Anspruch 3, ferner umfassend:
Synchronisieren (S205) des gesetzten Lebensstatus der Karte und der ersten Zuordnungsbeziehung mit dem Server.

5. Verfahren nach Anspruch 1, wobei die Kartenbindungsnachricht eine erste Kartenbindungsnachricht, eine zweite Kartenbindungsnachricht und eine Bindungsverifizierungsnachricht umfasst und die Kartenauthentifizierungsinformationen eine Kartenkennung der zu bindenden Karte, Kartentyp-Verifizierungsinformationen, die dem Kartentyp der zu bindenden Karte entsprechen, und einen Eingabeverifizierungscode umfassen; und
wobei das Senden der Kartenbindungsnachricht an den Server Folgendes umfasst:
Senden (S2011) der ersten Kartenbindungsnachricht an den Server, wobei die erste Kartenbindungsnachricht die Kartenkennung der zu bindenden Karte enthält;
Senden (S2012) der zweiten Kartenbindungsnachricht an den Server nach Empfang einer vom Server gesendeten ersten Antwortnachricht, wobei die erste Antwortnachricht den Kartentyp der zu bindenden Karte enthält und die zweite Kartenbindungsnachricht die dem Kartentyp der zu bindenden Karte entsprechenden Kartentyp-Verifizierungsinformationen enthält; und
Senden (S2013) der Bindungsverifizierungsnachricht an den Server nach Empfang einer vom Server gesendeten zweiten Antwortnachricht, wobei die zweite Antwortnachricht einen dynamischen Verifizierungscode enthält und die Bindungsverifizierungsnachricht den Eingabeverifizierungscode enthält.

6. Verfahren nach Anspruch 1, wobei das Verfahren für den Fall, dass das Benutzerendgerät zum ersten Mal eine Kartenbindung durchführt, ferner Folgendes umfasst:
Empfangen eines vom Server gesendeten universellen Programmdatenpakets; und
Laden des universellen Programmdatenpakets auf das Sicherheitselement.

7. Verfahren nach Anspruch 3, ferner umfassend:
Empfangen (S206) einer Standardkartenauswahl-Eingabe, die eine ausgewählte Standardkarte aus mehreren bereits gebundenen Karten angibt;
Steuern (S207) des Sicherheitselements, um einen Lebensstatus einer ursprünglichen Standardkarte auf einen gültigen Status zu aktualisieren, wobei der Lebensstatus der ursprünglichen Standardkarte vor der Aktualisierung ein Standardnutzungsstatus ist;
Steuern (S208) des Sicherheitselements, um einen Lebensstatus der ausgewählten Standardkarte auf den Standardnutzungsstatus zu aktualisieren; und
Synchronisieren (S209) des aktualisierten Lebensstatus der ausgewählten Standardkarte und des aktualisierten Lebensstatus der ursprünglichen Standardkarte mit dem Server.

8. Verfahren nach Anspruch 3, ferner umfassend:
Senden (S210) einer Kartenlöschanforderungsnachricht an den Server, sodass der Server eine Kartentransaktionskennung einer zu löschenden Karte unter mehreren bereits gebundenen Karten zurückmeldet, wobei die Kartenlöschanforderungsnachricht die zu löschende Karte angibt;
Empfangen (S211) der vom Server zurückgemeldeten Kartentransaktionskennung der zu löschenden Karte;
Steuern (S212) des Sicherheitselements, um den Lebensstatus der zu löschenden Karte auf einen ungültigen Status zu aktualisieren; und
Synchronisieren (S213) des aktualisierten Lebensstatus der zu löschenden Karte mit dem Server.

9. Verfahren nach Anspruch 8, wobei das Verfahren nach dem Empfang der vom Server zurückgemeldeten Kartentransaktionskennung der zu löschenden Karte ferner Folgendes umfasst:
Löschen einer zweiten Zuordnungsbeziehung über das Sicherheitselement, wobei die zweite Zuordnungsbeziehung eine Zuordnungsbeziehung zwischen dedizierten Karteninformationen für die zu löschende Karte, einem Kartentyp der zu löschenden Karte und dem Lebensstatus der zu löschenden Karte umfasst.

10. Benutzerendgerät (11, 700), umfassend ein Sicherheitselement, das universelle Personalisierungsdaten eines ersten Typs, die einen ersten Teil der Personalisierungsdaten zur Transaktionsverifizierung eines ersten Kartentyps darstellen, sowie universelle Personalisierungsdaten eines zweiten Typs, die einen ersten Teil der Personalisierungsdaten zur Transaktionsverifizierung eines zweiten Kartentyps darstellen, speichert, wobei verschiedene Karten des ersten Typs dieselben universellen Personalisierungsdaten des ersten Typs und verschiedene Karten des zweiten Typs dieselben universellen Personalisierungsdaten des zweiten Typs gemeinsam nutzen;
wobei das Benutzerendgerät Folgendes umfasst:
ein Sendemodul (701), das so konfiguriert ist, dass es an einen Server (12) eine Kartenbindungsnachricht sendet, die Kartenauthentifizierungsinformationen einer in einer Anwendung des Benutzerendgeräts zu bindenden Karte enthält, sodass der Server einen Kartentyp der zu bindenden Karte ermittelt, und im Falle einer erfolgreichen Verifizierung der zu bindenden Karte dedizierte Karteninformationen für die zu bindende Karte zuweist, falls die Verifizierung der zu bindenden Karte erfolgreich ist, wobei die dedizierten Karteninformationen eine Kartentransaktionskennung und dedizierte Personalisierungsdaten für die zu bindende Karte umfassen, wobei die Kartentransaktionskennung ein Token für die Karte ist und die dedizierten Personalisierungsdaten für die zu bindende Karte einen zweiten Teil der Personalisierungsdaten zur Transaktionsverifizierung der zu bindenden Karte darstellen;
ein Empfangsmodul (702), das so konfiguriert ist, dass es vom Server den Kartentyp der Karte und die dedizierten Karteninformationen für die zu bindende Karte empfängt, ohne dass entsprechende universelle Personalisierungsdaten für die zu bindende Karte vom Server heruntergeladen werden müssen, wobei diese universellen Personalisierungsdaten bereits im Sicherheitselement gespeichert sind; und
ein Verarbeitungsmodul (703), das so konfiguriert ist, dass es die dedizierten Karteninformationen für die zu bindende Karte in das Sicherheitselement lädt, um die zu bindende Karte in der Anwendung zu binden, wobei die dedizierten Karteninformationen für die gebundene Karte zusammen mit entweder den universellen Personalisierungsdaten des ersten Typs oder den universellen Personalisierungsdaten des zweiten Typs, die im Sicherheitselement gespeichert sind und dem Kartentyp der gebundenen Karte entsprechen, zur Durchführung einer Transaktionsverifizierung der gebundenen Karte verwendet werden können.

11. Benutzerendgerät (900), das einen Prozessor (902) und einen Speicher (901) umfasst, in dem Computerprogrammanweisungen gespeichert sind, wobei der Prozessor die Computerprogrammanweisungen ausführt, um das Kartenverwaltungsverfahren nach einem der Ansprüche 1 bis 9 zu implementieren.

12. Computerspeichermedium, auf dem Computerprogrammanweisungen gespeichert sind, wobei die Computerprogrammanweisungen von einem Prozessor ausgeführt werden, um das Kartenverwaltungsverfahren nach einem der Ansprüche 1 bis 9 durchzuführen.

## Revendications

1. Procédé de gestion de cartes, applicable à un terminal utilisateur (11, 700), le terminal utilisateur comportant un élément de sécurité qui stocke des données de personnalisation universelles de premier type qui constituent une première partie de données de personnalisation pour la vérification de transactions d'un premier type de cartes et des données de personnalisation universelles de second type qui constituent une première partie de données de personnalisation pour la vérification de transactions d'un second type de cartes, différentes cartes du premier type partageant les mêmes données de personnalisation universelles de premier type et différentes cartes du second type partageant les mêmes données de personnalisation universelles de second type, le procédé comprenant :
envoyer (S201), à un serveur (12), un message de liaison de carte incluant des informations d'authentification de carte d'une carte à lier dans une application du terminal utilisateur de sorte que le serveur détermine un type de carte de la carte à lier et attribue des informations de carte dédiées pour la carte à lier en cas de vérification réussie de la carte à lier,
dans lequel les informations de carte dédiées comprennent un identifiant de transaction de carte et des données de personnalisation dédiées pour la carte à lier, l'identifiant de transaction de carte étant un token pour la carte à lier et les données de personnalisation dédiées pour la carte à lier constituant une seconde partie de données de personnalisation pour la vérification de transactions de la carte à lier ;
recevoir (S202), depuis le serveur, le type de carte de la carte à lier et les informations de carte dédiées pour la carte à lier, sans avoir besoin de télécharger les données de personnalisation universelles correspondant au type de carte déterminé de la carte à lier, les données de personnalisation universelles étant déjà stockées dans l'élément de sécurité ; et
charger (S203) les informations de carte dédiées pour la carte à lier sur l'élément sécurisé afin de lier la carte à lier dans l'application, les informations de carte dédiées pour la carte liée, ainsi que l'une des données de personnalisation universelles de premier type et des données de personnalisation universelles de second type qui est stockée dans l'élément sécurisé et correspond au type de carte, étant utilisables pour effectuer la vérification de transactions de la carte liée.

2. Procédé selon la revendication 1, dans lequel dans le cas où la carte à lier comprend une première carte et une seconde carte du même type de carte, les informations de carte dédiées pour la première carte, ainsi que l'une des données de personnalisation universelles de premier type et des données de personnalisation universelles de second type sont utilisables pour effectuer la vérification de transactions de la première carte lorsque la première carte est liée, et les informations de carte dédiées pour la seconde carte, ainsi que l'une des données de personnalisation universelles de premier type et des données de personnalisation universelles de second type sont utilisables pour effectuer la vérification de transactions de la seconde carte lorsque la seconde carte est liée.

3. Procédé selon la revendication 1, comprenant en outre : définir un état de vie de la carte à un état valide par l'élément de sécurité, et générer ou mettre à jour une première relation de mappage, la première relation de mappage comprenant une relation de mappage parmi les informations de carte dédiées pour la carte, le type de carte de la carte, et l'état de vie de la carte.

4. Procédé selon la revendication 3, comprenant en outre : synchroniser (S205) l'état de vie défini de la carte et la première relation de mappage avec le serveur.

5. Procédé selon la revendication 1, dans lequel le message de liaison de carte comprend un premier message de liaison de carte, un second message de liaison de carte et un message de vérification de liaison, et les informations d'authentification de carte comprennent un identifiant de carte de la carte à lier, des informations de vérification de type de carte correspondant au type de carte de la carte à lier et un code de vérification d'entrée ; et
dans lequel l'envoi du message de liaison de carte au serveur comprend :
envoyer (S2011) le premier message de liaison de carte au serveur, le premier message de liaison de carte comprenant l'identifiant de carte de la carte à lier ;
envoyer (S2012) le second message de liaison de carte au serveur lors de la réception d'un premier message de réponse envoyé par le serveur, le premier message de réponse comprenant le type de carte de la carte à lier,
et le second message de liaison de carte comprenant les informations de vérification de type de carte correspondant au type de carte de la carte à lier ; et
envoyer (S2013) le message de vérification de liaison au serveur lors de la réception d'un second message de réponse envoyé par le serveur, le second message de réponse comprenant un code de vérification dynamique, et le message de vérification de liaison comprenant le code de vérification d'entrée.

6. Procédé selon la revendication 1, dans lequel, dans le cas où le terminal utilisateur effectue une liaison de carte pour la première fois, le procédé comprend en outre :
recevoir un paquet de données de programme universel envoyé par le serveur ; et
charger le paquet de données de programme universel sur l'élément de sécurité.

7. Procédé selon la revendication 3, comprenant en outre :
recevoir (S206) une entrée de sélection de carte par défaut qui indique une carte sélectionnée par défaut parmi plusieurs cartes qui ont été liées ;
commander (S207) l'élément de sécurité à mettre à jour un état de vie d'une carte originale par défaut à un état valide, l'état de vie de la carte originale par défaut avant la mise à jour étant un état d'utilisation par défaut ;
commander (S208) l'élément de sécurité à mettre à jour un état de vie de la carte sélectionnée par défaut à l'état d'utilisation par défaut ; et
synchroniser (S209) l'état de vie mis à jour de la carte sélectionnée par défaut et l'état de vie mis à jour de la carte originale par défaut avec le serveur.

8. Procédé selon la revendication 3, comprenant en outre :
envoyer (S210) un message de demande de suppression de carte au serveur de sorte que le serveur renvoie un identifiant de transaction de carte d'une carte à supprimer parmi plusieurs cartes qui ont été liées, le message de demande de suppression de carte indiquant la carte à supprimer ;
recevoir (S211) l'identifiant de transaction de carte de la carte à supprimer renvoyé par le serveur ;
commander (S212) l'élément de sécurité à mettre à jour un état de vie de la carte à supprime à un invalide ; et
synchroniser (S213) l'état de vie mis à jour de la carte à supprimer avec le serveur.

9. Procédé selon la revendication 8, dans lequel après la réception de l'identifiant de transaction de carte de la carte à supprimer renvoyé par le serveur, le procédé comprend en outre :
supprimer une seconde relation de mappage par l'élément de sécurité, la seconde relation de mappage comprenant une relation de mappage parmi des informations de carte dédiées pour la carte à supprimer, un type de carte de la carte à supprimer, et l'état de vie de la carte à supprimer.

10. Terminal utilisateur (11, 700), comportant un élément de sécurité qui stocke des données de personnalisation universelles de premier type qui constituent une première partie de données de personnalisation pour la vérification de transactions d'un premier type de cartes et des données de personnalisation universelles de second type qui constituent une première partie de données de personnalisation pour la vérification de transactions d'un second type de cartes, différentes cartes du premier type partageant les mêmes données de personnalisation universelles de premier type et différentes cartes du second type partageant les mêmes données de personnalisation universelles de second type ;
dans lequel le terminal utilisateur comprend en outre :
un module d'envoi (701) configuré pour envoyer, à un serveur (12), un message de liaison de carte incluant des informations d'authentification de carte d'une carte à lier dans une application du terminal utilisateur de sorte que le serveur détermine un type de carte de la carte à lier, et en cas de vérification réussie de la carte à lier, attribue des informations de carte dédiées pour la carte à lier en cas de vérification réussie de la carte à lier,
dans lequel les informations de carte dédiées comprennent un identifiant de transaction de carte et des données de personnalisation dédiées pour la carte à lier,
l'identifiant de transaction de carte étant un token pour la carte et les données de personnalisation dédiées pour la carte à lier constituant une seconde partie de données de personnalisation pour la vérification de transactions de la carte à lier ;
un module de réception (702) configuré pour recevoir, depuis le serveur, le type de carte de la carte et les informations de carte dédiées pour la carte à lier, sans avoir besoin de télécharger les données de personnalisation universelles correspondantes pour la carte à lier depuis le serveur, les données de personnalisation universelles étant déjà stockées dans l'élément de sécurité ; et
un module de traitement (703) configuré pour charger les informations de carte dédiées pour la carte à lier sur l'élément sécurisé afin de lier la carte à lier dans l'application, les informations de carte dédiées pour la carte liée, ainsi que l'une des données de personnalisation universelles de premier type et des données de personnalisation universelles de second type qui est stockée dans l'élément sécurisé et correspond au type de carte de la carte liée étant utilisables pour effectuer la vérification de transactions de la carte liée.

11. Terminal utilisateur (900), comprenant un processeur (902) et une mémoire (901) stockant des instructions de programme informatique, dans lequel le processeur exécute les instructions de programme informatique pour mettre en œuvre le procédé de gestion de cartes selon l'une quelconque des revendications 1 à 9.

12. Support de stockage informatique, stockant des instructions de programme informatique, dans lequel les instructions de programme informatique sont exécutées par un processeur pour mettre en œuvre le procédé de gestion de cartes selon l'une quelconque des revendications 1 à 9.
